(19) Europäisches Patentamt
European Patent Office
Office européen des brevets

(11) **EP 2 525 325 B1**

(12) **EUROPEAN PATENT SPECIFICATION**

(45) Date of publication and mention
of the grant of the patent:
**12.07.2017 Bulletin 2017/28**

(51) Int Cl.:
*G06T 9/00* *(2006.01)*        *H04N 9/04* *(2006.01)*

(21) Application number: **12162020.7**

(22) Date of filing: **29.03.2012**

(54) **Image processing apparatus, image processing method, program, storage medium, and learning apparatus**

Bildverarbeitungsvorrichtung, Bildverarbeitungsverfahren, Programm, Speichermedium und Lernvorrichtung

Appareil et procédé de traitement d'image, programme, support de stockage et appareil d'apprentissage

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.05.2011 JP 2011113058**
**21.11.2011 JP 2011253531**

(43) Date of publication of application:
**21.11.2012 Bulletin 2012/47**

(73) Proprietor: **Sony Corporation**
**Tokyo 108-0075 (JP)**

(72) Inventors:
• **Chida, Keisuke**
**Tokyo, 108-0075 (JP)**
• **Miyai, Takeshi**
**Tokyo, 108-0075 (JP)**
• **Takahashi, Noriaki**
**Tokyo, 108-0075 (JP)**

(74) Representative: **Beder, Jens**
**Mitscherlich PartmbB**
**Patent- und Rechtsanwälte**
**Sonnenstraße 33**
**80331 München (DE)**

(56) References cited:
**EP-A1- 1 073 279**        **EP-A1- 1 439 715**
**WO-A1-01/20550**        **JP-A- 2005 269 395**
**US-A1- 2006 038 891**        **US-A1- 2007 013 786**

**Description**

BACKGROUND

The present technology relates to an image processing apparatus, an image processing method, a program, a storage medium, and a learning apparatus, and more particularly, to an image processing apparatus, an image processing method, a program, a storage medium, and a learning apparatus, which are capable of generating a color image enlarged from an image of a Bayer array with a high degree of accuracy.

For example, EP 1 073 279A1 refers to an image signal processor, image signal processing method, learning device, learning method, and recorded medium. Further, JP 2005-269395 refers to a method and device for processing an information signal.

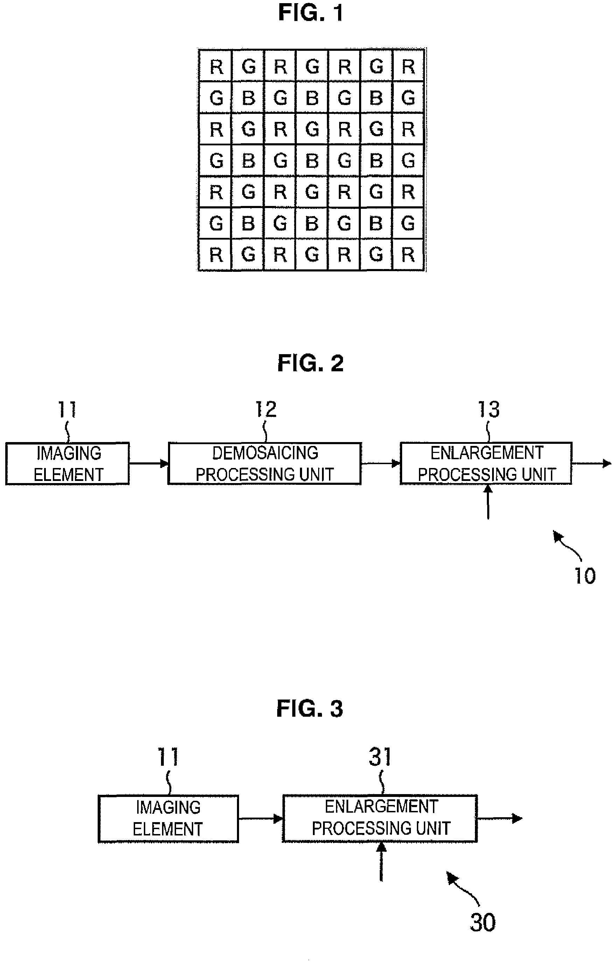

In the past, there have been imaging devices including only one imaging element such as a charge coupled device (CCD) image sensor or a complementary metal-oxide semiconductor (CMOS) image sensor for the purpose of miniaturization. In the imaging devices, different color filters are generally employed for respective pixels of an imaging element, and so a signal of any one of a plurality of colors such as red, green, and blue (RGB) is acquired from each pixel. For example, an image acquired by an imaging element in this way becomes an image of a color array illustrated in FIG. 1. In the following, a color array of FIG. 1 is referred to as a "Bayer array."

Typically, an image of a Bayer array acquired by an imaging element is converted into a color image in which each pixel has a pixel value of any one of a plurality of color components such as RGB by an interpolation process called a demosaicing process.

As a method of generating a color image enlarged from an image of the Bayer array, there is a method of generating a color image from an image of a Bayer array by a demosaicing process and performing an enlargement process on the color image (for example, see Japanese Patent Application Laid-Open No. 2006-54576).

FIG. 2 is a block diagram illustrating a configuration of an image processing apparatus that generates an enlarged color image by the above method.

The image processing apparatus 10 of FIG. 2 includes an imaging element 11, a demosaicing processing unit 12, and an enlargement processing unit 13.

The imaging element 11 of the image processing apparatus 10 employs different color filters for respective pixels. The imaging element 11 acquires an analog signal of any one of an R component, a G component, and a B component of light from a subject for each pixel, and performs analog-to-digital (AD) conversion on the analog signal to thereby generate an image of a Bayer array. The imaging element 11 supplies the generated image of the Bayer array to the demosaicing processing unit 12.

The demosaicing processing unit 12 performs the demosaicing process on the image of the Bayer array supplied from the imaging element 11, and generates a color image (hereinafter referred to as an "RGB image") having pixel values of the R component, the G component, and the B component of the respective pixels. Then, the demosaicing processing unit 12 supplies the generated RGB image to the enlargement processing unit 13.

The enlargement processing unit 13 performs an enlargement process on the RGB image supplied from the demosaicing processing unit 12 based on an enlargement rate in a horizontal direction and a vertical direction input from the outside, and outputs the enlarged RGB image as an output image.

As a method of enlarging an RGB image at an arbitrary magnification, there is a method using a class classification adaptive process (for example, see Japanese Patent No. 4441860). The class classification adaptive process refers to a process that classifies a pixel of interest which is a pixel attracting attention in a processed image into a predetermined class, and predicts a pixel value of the pixel of interest by linearly combining a predictive coefficient obtained by learning corresponding to the class with a pixel value of a non-processed image corresponding to the pixel of interest.

SUMMARY

Various aspects of the invention are defined in the appended claims.

For example, when the class classification adaptive process is used as the demosaicing process and the enlargement process in the image processing apparatus 10 of FIG. 1, information such as a fine line portion present in an image of a Bayer array may be lost by the demosaicing process, whereby the accuracy of the output image is degraded.

Specifically, when information such as a fine line portion is lost by the demosaicing process and so an RGB image has a flat portion, it is difficult for the enlargement processing unit 13 to recognize whether the flat portion of the RGB image is an originally existing flat portion, or the flat portion caused by loss of the fine line portion. Thus, even when information such as the fine line portion has been lost by the demosaicing process, the enlargement processing unit 13 performs the enlargement process on the RGB image supplied from the demosaicing processing unit 12 similarly to the RGB image in which the information such as the fine line portion has not been lost. For this reason, an output image becomes an image corresponding to an image obtained by smoothing an image of a Bayer array that has not been subjected to the demosaicing process, and thus the accuracy of the output image is degraded.

Similarly, even when an edge of a color or the like which is not present in an image of a Bayer array is generated due to the demosaicing process, the accuracy of the output image is degraded.

The present technology is made in light of the foregoing, and it is desirable to generate a color image enlarged from an image of a Bayer array with a high degree of accuracy.

This problem is solved by the subject matter of independent claims 1, 2, 3.

According to the subject matters of independent claims 1, 2 and 3 a color image enlarged from an image of a Bayer array can be generated with a high degree of accuracy.

BRIEF DESCRIPTION OF THE DRAWINGS

The invention will now be described with reference to an embodiment that are shown in the appended drawings throughout like parts are denote by like references and in which

FIG. 1 is a diagram illustrating an example of a Bayer array;
FIG. 2 is a block diagram illustrating an exemplary configuration of an image processing apparatus;
FIG. 3 is a block diagram illustrating an exemplary configuration of an image processing apparatus according to an example not forming part of the invention;
FIG. 4 is a block diagram illustrating a detailed exemplary configuration of an enlargement processing unit;
FIG. 5 is a block diagram illustrating a detailed exemplary configuration of an enlargement prediction processing unit;
FIG. 6 is a first diagram illustrating positions of pixels of an output image;
FIG. 7 is a diagram illustrating an example of a tap structure of a class tap in the enlargement prediction processing unit of FIG. 5;
FIG. 8 is a diagram illustrating an example of a tap structure of a prediction tap in the enlargement prediction processing unit of FIG. 5;
FIG. 9 is a diagram illustrating positions corresponding to a class tap interpolated by an interpolating unit illustrated in FIG. 5;
FIG. 10 is a flowchart for explaining image processing of an enlargement processing unit;
FIG. 11 is a block diagram illustrating an exemplary configuration of a learning apparatus that learns a predictive coefficient in the enlargement prediction processing unit of FIG. 5;
FIG. 12 is a flowchart for explaining a learning process of the learning apparatus of FIG. 11;
FIGS. 13A and 13B are diagrams illustrating examples of an output image;
FIG. 14 is a block diagram illustrating an exemplary configuration of an enlargement prediction processing unit of an image processing apparatus according to an embodiment of the present technology;
FIG. 15 is a second diagram illustrating positions of pixels of an output image;
FIG. 16 is a diagram illustrating an example of a tap structure of a class tap in the enlargement prediction processing unit of FIG. 14;
FIG. 17 is a diagram illustrating an example of a tap structure of a prediction tap in the enlargement prediction processing unit of FIG. 14;
FIG. 18 is a diagram for explaining the position of a center pixel;
FIG. 19 is a flowchart for explaining image processing of an enlargement processing unit included in the enlargement prediction processing unit of FIG. 14;
FIG. 20 is a block diagram illustrating an exemplary configuration of a learning apparatus that learns a predictive coefficient in the enlargement prediction processing unit of FIG. 14;
FIG. 21 is a flowchart for explaining a learning process of the learning apparatus of FIG. 20; and
FIG. 22 is a diagram illustrating an exemplary configuration of a computer according to an embodiment.

DETAILED DESCRIPTION OF EXAMPLES AND EMBODIMENT(S)

Hereinafter, a preferred embodiment of the present disclosure will be described in detail with reference to the appended drawings. Note that, in this specification and the appended drawings, structural elements that have substantially the same function and structure are denoted with the same reference numerals, and repeated explanation of these structural elements is omitted.

<Example not forming part of the invention>

[Exemplary Configuration of Image Processing Apparatus]

FIG. 3 is a block diagram illustrating an exemplary configuration of an image processing apparatus according to the example of the present technology.

In FIG. 3, the same components as in FIG. 2 are denoted by the same reference numerals. The redundant description thereof will be appropriately omitted.

A configuration of the image processing apparatus 30 of FIG. 3 is mainly different from the configuration of FIG. 2 in that an enlargement processing unit 31 is provided instead of the demosaicing processing unit 12 and the enlargement processing unit 13. The image processing apparatus 30 directly generates an RGB image enlarged from an image of the Bayer array using the class classification adaptive process.

Specifically, the enlargement processing unit 31 of the image processing apparatus 30 enlarges an image of a Bayer array generated by the imaging element 11 based on enlargement rates in a horizontal direction and a vertical direction input from the outside by a user (not shown) or the like.

The enlargement rates in the horizontal direction and the vertical direction may be identical to or different from each other. The enlargement rates in the horizontal direction and the vertical direction may be an integer or a fraction.

The enlargement processing unit 31 performs the class classification adaptive process on the enlarged image of the Bayer array to generate an RGB image. The enlargement processing unit 31 outputs the generated RGB image as the output image.

[Exemplary Configuration of Enlargement Processing Unit]

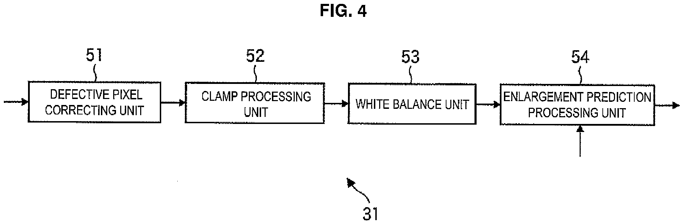

FIG. 4 is a block diagram illustrating a detailed exemplary configuration of the enlargement processing unit 31 illustrated in FIG. 3.

The enlargement processing unit 31 of FIG. 4 includes a defective pixel correcting unit 51, a clamp processing unit 52, a white balance unit 53, and an enlargement prediction processing unit 54.

The defective pixel correcting unit 51, the clamp processing unit 52, and the white balance unit 53 of the enlargement processing unit 31 perform pre-processing on the image of the Bayer array in order to increase the quality of the output image.

Specifically, the defective pixel correcting unit 51 of the enlargement processing unit 31 detects a pixel value of a defective pixel in the imaging element 11 from the image of the Bayer array supplied from the imaging element 11 of FIG. 3. The defective pixel in the imaging element 11 refers to an element that does not respond to incident light or an element in which charges always remain accumulated for whatever reason. The defective pixel correcting unit 51 corrects the detected pixel value of the defective pixel in the imaging element 11, for example, using a pixel value of a non-defective pixel therearound, and supplies the corrected image of the Bayer array to the clamp processing unit 52.

The clamp processing unit 52 clamps the corrected image of the Bayer array supplied from the defective pixel correcting unit 51. Specifically, in order to prevent a negative value from being deleted, the imaging element 11 shifts a signal value of an analog signal in a positive direction, and then performs AD conversion. Thus, the clamp processing unit 52 clamps the corrected image of the Bayer array so that a shifted portion at the time of AD conversion can be negated. The clamp processing unit 52 supplies the clamped image of the Bayer array to the white balance unit 53.

The white balance unit 53 adjusts white balance by correcting gains of color components of the image of the Bayer array supplied from the clamp processing unit 52. The white balance unit 53 supplies the image of the Bayer array whose white balance has been adjusted to the enlargement prediction processing unit 54.

The enlargement prediction processing unit 54 enlarges the image of the Bayer array supplied from the white balance unit 53 based on the enlargement rates in the horizontal direction and the vertical direction input from the outside. Then, the enlargement prediction processing unit 54 performs the class classification adaptive process on the enlarged image of the Bayer array to generate an RGB image. The enlargement prediction processing unit 54 outputs the generated RGB image as the output image.

[Detailed Exemplary Configuration of Enlargement Prediction Processing Unit]

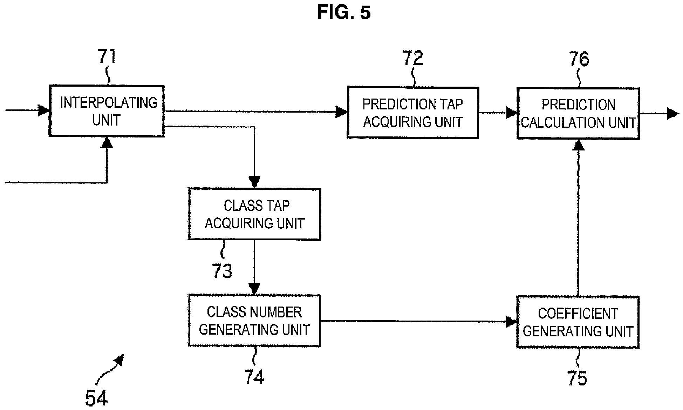

FIG. 5 is a block diagram illustrating a detailed exemplary configuration of the enlargement prediction processing unit 54 illustrated in FIG. 4.

The enlargement prediction processing unit 54 of FIG. 5 includes an interpolating unit 71, a prediction tap acquiring unit 72, a class tap acquiring unit 73, a class number generating unit 74, a coefficient generating unit 75, and a prediction calculation unit 76.

The interpolating unit 71 of the enlargement prediction processing unit 54 functions as the enlargement processing unit, and decides the position of each of pixels of an output image to be predicted in the image of the Bayer array supplied from the white balance unit 53 of FIG. 4 based on the enlargement rates in the horizontal direction and the vertical direction input from the outside. The interpolating unit 71 sequentially sets each of the pixels of the output image as a pixel of interest. The interpolating unit 71 decides the position, in the image of the Bayer array, corresponding to one or more pixel values (hereinafter referred to as a "prediction tap") used for predicting a pixel value of a pixel of interest. Specifically, the interpolating unit 71 decides the position spatially having a predetermined position relation on the same position in the image of the Bayer array as a pixel of interest in the output image as the position corresponding to the prediction tap.

The interpolating unit 71 performs a predetermined interpolation process on the image of the Bayer array, and interpolates a pixel value of each color component present at the position corresponding to the prediction tap. The interpolating unit 71 supplies the prediction tap of each color component obtained as a result of interpolation to the prediction tap acquiring unit 72.

The interpolating unit 71 decides the position, the image of the Bayer array corresponding to one or more pixel values (hereinafter referred to as a "class tap") used for performing class classification for classifying a pixel of interest into any one of one or more classes. Specifically, the interpolating unit 71 decides the position spatially having a predetermined position relation on the same position in the image of the Bayer array as the position of a pixel of interest in the output image as the position corresponding to the class tap.

The interpolating unit 71 performs a predetermined interpolation process on the image of the Bayer array, and interpolates a pixel value of each color component present at the position corresponding to the class tap. The interpolating unit 71 supplies the class tap of each color component obtained as a result of interpolation to the class tap acquiring unit 73.

For example, an interpolation process using a bicubic technique, a linear interpolation process, or the like may be used as the interpolation process in the interpolating unit 71. The prediction tap and the class tap can have the same tap structure or the different tap structures. However, the tap structures of the prediction tap and the class tap are constant regardless of the enlargement rate.

The prediction tap acquiring unit 72 acquires the prediction tap of each color component supplied from the interpolating unit 71, and supplies the acquired prediction tap to the prediction calculation unit 76.

The class tap acquiring unit 73 acquires the class tap of each color component supplied from the interpolating unit 71, and supplies the acquired class tap to the class number generating unit 74.

The class number generating unit 74 functions as a class classifying unit, and performs class classification on a pixel of interest for each color component based on the class tap of each color component supplied from the class tap acquiring unit 73. The class number generating unit 74 generates a class number corresponding to a class obtained as the result, and supplies the generated class number to the coefficient generating unit 75.

For example, a method using adaptive dynamic range coding (ADRC) may be employed as a method of performing the class classification.

When the method using the ADRC is employed as the method of performing the class classification, a pixel value configuring the class tap is subjected to the ADRC process, and a class number of a pixel of interest is decided according to a re-quantization code obtained as the result.

Specifically, a process of equally dividing a value between a maximum value MAX and a minimum value MIN of the class tap by a designated bit number p and requantizing the division result by the following Formula (1) is performed as the ADRC process.

$$qi=[(ki-MIN+0.5)*2^p/DR] \qquad ---(1)$$

In Formula (1), [ ] means that a number after the decimal point of a value in [ ] is truncated. Further, $ki$ represents an i-th pixel value of the class tap, and $qi$ represents a re-quantization code of the i-th pixel value of the class tap. Further, DR represents a dynamic range and is "MAX-MIN+1."

Then, a class number class of a pixel of interest is calculated as in the following Formula (2) using the re-quantization code $qi$ obtained as described above.

[Math. 1]

$$class = \sum_{i=1}^{n} q_i \left(2^p\right)^{i-1} \qquad \cdots (2)$$

In Formula (2), n represents the number of pixel values configuring the class tap.

In addition to the method using the ADRC, a method of using an amount of data compressed by applying a data compression technique such as a discrete cosine transform (DCT), a vector quantization (VQ), or differential pulse code modulation (DPCM) as a class number may be used as the method of performing the class classification.

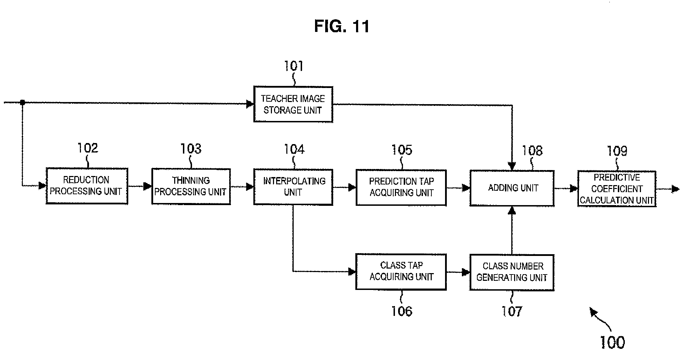

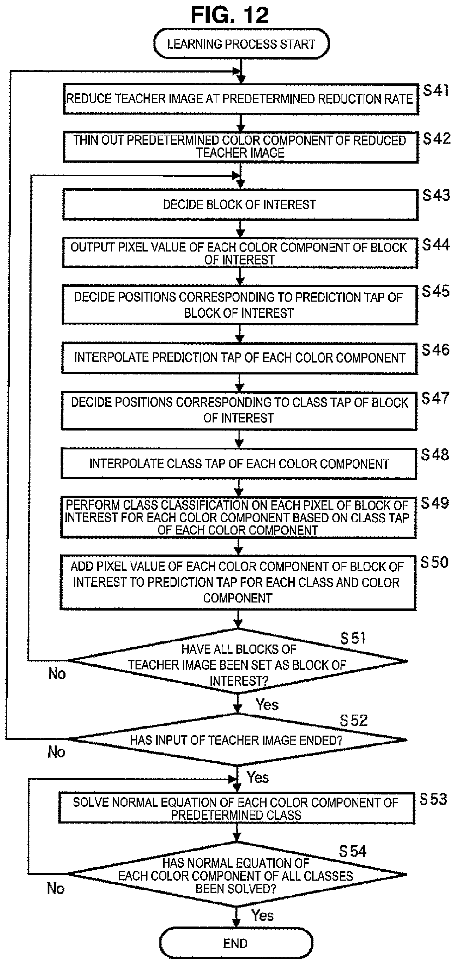

The coefficient generating unit 75 stores a predictive coefficient of each color component and class obtained by learning which will be described later with reference to FIGS. 11 and 12. The coefficient generating unit 75 reads a predictive coefficient of a class corresponding to a class number of each color component supplied from the class number generating unit 74 among the stored predictive coefficients, and supplies the read predictive coefficient to the prediction calculation unit 76.

The prediction calculation unit 76 performs a predetermined prediction calculation for calculating a prediction value of a true value of a pixel value of a pixel of interest for each color component using the prediction tap of each color component supplied from the prediction tap acquiring unit 72 and the predictive coefficient of each color component supplied from the coefficient generating unit 75. Thus, the prediction calculation unit 76 generates a prediction value of a pixel value of each color component of a pixel of interest as a pixel value of each color component of a pixel of interest of an output image, and outputs the generated pixel value.

[Example of Position of Each Pixel of Output Image]

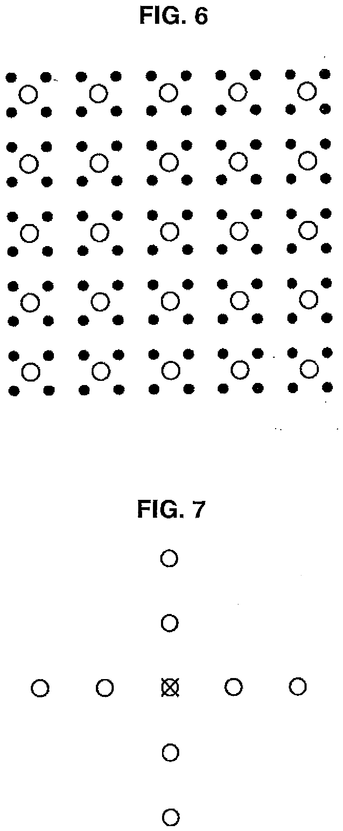

FIG. 6 is a diagram illustrating positions of pixels of the output image when the enlargement rates in the horizontal direction and the vertical direction are double.

In FIG. 6, a white circle represents the position of a pixel of the image of the Bayer array input to the interpolating unit 71, and a black circle represents the position of a pixel of the output image.

As illustrated in FIG. 6, when the enlargement rates in the horizontal direction and the vertical direction are double, an interval between the positions of the pixels of the output image in the horizontal direction is half (1/2) an interval between the positions of the pixels of the image of the Bayer array, in the horizontal direction, input to the interpolating unit 71. Further, an interval between the positions of the pixels of the output image in the vertical direction is half (1/2) an interval between the positions of the pixels of the image of the Bayer array, in the vertical direction, input to the interpolating unit 71.

[Example of Tap Structure of Class Tap]

FIG. 7 is a diagram illustrating an example of the tap structure of the class tap. The class tap may have a tap structure different from the structure illustrated in FIG. 7.

In FIG. 7, an x mark represents the same position (hereinafter referred to as "pixel-of-interest corresponding position"), in the image of the Bayer array, as the position of a pixel of interest in the output image. In FIG. 7, a circle mark represents the position, in the image of the Bayer array corresponding to a class tap of a pixel of interest.

In the example of FIG. 7, pixel values corresponding to a total of 9 positions at which 5 pixel values are arranged centering on the pixel-of-interest corresponding position in the horizontal direction and the vertical direction, respectively, at intervals of pixel units of the image of the Bayer array are regarded as the class tap.

In this case, the position corresponding to the class tap is identical to the position of any one of pixels of the image of the Bayer array enlarged at the enlargement rates in the horizontal direction and the vertical direction input from the outside. That is, the class tap includes 9 pixel values in the image of the Bayer array enlarged at the enlargement rates in the horizontal direction and the vertical direction input from the outside. Further, a relation between the pixel-of-interest corresponding position and the position corresponding to the class tap is constant regardless of the enlargement rates in the horizontal direction and the vertical direction input from the outside.

[Example of Tap Structure of Prediction Tap]

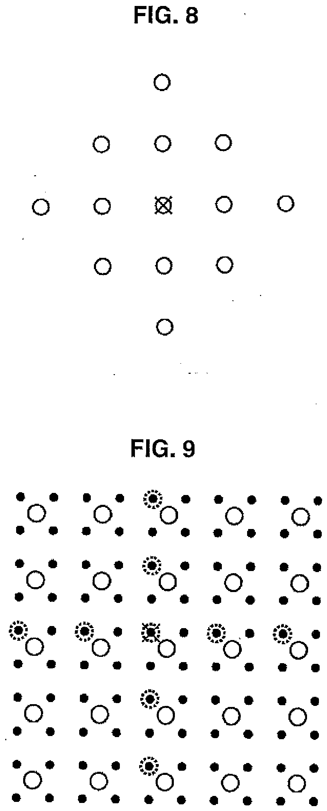

FIG. 8 is a diagram illustrating an example of the tap structure of the prediction tap. The prediction tap may have a tap structure different from the structure illustrated in FIG. 8.

In FIG. 8, an x mark represents the pixel-of-interest corresponding position. In FIG. 8, a circle mark represents the position, in the image of the Bayer array, corresponding to a prediction tap of a pixel of interest.

In the example of FIG. 7, pixel values corresponding to a total of 13 positions including a total of 9 pixel values at which 5 pixel values are arranged centering on the pixel-of-interest corresponding position in the horizontal direction and the vertical direction, respectively, at intervals of pixel units of the image of the Bayer array and a total of 4 pixel values at which 1 pixel value is arranged above and below two adjacent positions at the right and left sides of the pixel-of-interest corresponding position among the positions, respectively, at intervals of pixel units of the image of the Bayer array are regarded as the prediction tap. That is, the positions corresponding to the pixel values configuring the prediction tap are arranged in a diamond form.

In this case, the position corresponding to the prediction tap is identical to the position of any one pixel of the image of the Bayer array enlarged at the enlargement rates in the horizontal direction and the vertical direction input from the outside. That is, the prediction tap includes 13 pixel values in the image of the Bayer array enlarged at the enlargement rates in the horizontal direction and the vertical direction input from the outside. Further a relation between the pixel-of-interest corresponding position and the position corresponding to the prediction tap is constant regardless of the -enlargement rates in the horizontal direction and the vertical direction input from the outside.

[Description of Interpolation by Interpolating Unit]

FIG. 9 is a diagram illustrating the positions corresponding to the class tap interpolated by the interpolating unit 71 of FIG. 5.

In FIG. 9, an x mark represents the pixel-of-interest corresponding position. Further, in FIG. 9, white circles represent the positions of pixels of the image of the Bayer array input to the interpolating unit 71, and black circles represent the positions of pixels of the output image. Further, in the example of FIG. 9, the enlargement rates in the horizontal direction and the vertical direction are double, and the class tap has the structure illustrated in FIG. 7.

As illustrated in FIG. 9, for example, the interpolating unit 71 interpolates pixel values corresponding to a total of 9 positions at which 5 pixel values are arranged centering on the pixel-of-interest corresponding position in the horizontal direction and the vertical direction, respectively, at intervals of pixel units of the image of the Bayer array as the class tap. That is, in FIG. 9, pixel values at the positions represented by black circles surrounded by a dotted circle are interpolated as the class tap.

The interpolation of the class tap is performed for each color component using pixel values at the positions around the positions corresponding to pixel values configuring the class tap among pixel values of color components of the image of the Bayer array. For example, the class tap of R components used for generating a pixel value of an R component of a pixel of interest at the pixel-of-interest corresponding position of FIG. 9 is interpolated using pixel values of R components at the positions around the 9 positions represented by black circles surrounded by dotted circles in FIG. 9.

[Description of Prediction Calculation]

Next, a description will be made in connection with a prediction calculation in the prediction calculation unit 76 of FIG. 5 and learning of a predictive coefficient used for the prediction calculation.

For example, when a linear first-order prediction calculation is employed as a predetermined prediction calculation, a pixel value of each color component of each pixel of the output image is obtained by the following linear first-order Formula:

[Math. 2]

$$y = \sum_{i=1}^{n} W_i\, x_i \qquad \cdots (3)$$

In Formula (3), $x_i$ represents an i-th pixel value among pixel values configuring the prediction tap on a pixel value y, and $W_i$ represents an i-th predictive coefficient which is multiplied by the i-th pixel value. Further, n represents the number of pixel values configuring the prediction tap.

Further, when $y_k'$ represents a prediction value of a pixel value of each color component of a pixel of an output image of a k-th sample, the prediction value $y_k'$ is represented by the following Formula (4).

$$y_k' = W_1 \times x_{k1} + W_2 \times x_{k2} + \cdots + W_n \times x_{kn} \qquad \cdots (4)$$

In Formula (4), $x_{ki}$ represents an i-th pixel value among pixel values configuring the prediction tap on a true value of the prediction value $y_k'$, and $W_i$ represents an i-th predictive coefficient which is multiplied by the i-th pixel value. Further, n represents the number of pixel values configuring the prediction tap.

Further, when $y_k$ represents a true value of the prediction value $y_k'$, a prediction error $e_k$ is represented by the following Formula (5).

$$e_k = y_k - \{ W_1 \times x_{k1} + W_2 \times x_{k2} + \cdots + W_n \times x_{kn} \} \qquad \cdots (5)$$

In FIG. 5, xki represents an i-th pixel value among pixel values configuring the prediction tap on a true value of the prediction value yk', and Wi represents an i-th predictive coefficient which is multiplied by the i-th pixel value. Further, n represents the number of pixel values configuring the prediction tap.

The predictive coefficient Wi that causes the prediction error ek of Formula (5) to become zero (0) is optimum for prediction of the true value yk, but when the number of samples for learning is smaller than n, the predictive coefficient Wi is not uniquely decided.

In this regard, for example, when the least-square method is employed as a norm representing that the predictive coefficient Wi is optimum, the optimum predictive coefficient Wi can be obtained by minimizing a sum E of square errors represented by the following Formula (6).

[Math. 3]

$$E = \sum_{k=1}^{m} e_k^2 \qquad \cdots (6)$$

A minimum value of the sum E of the square errors of Formula (6) is given by Wi that causes a value, obtained by differentiating the sum E by the predictive coefficient Wi to become zero (0) as in the following Formula (7).

[Math. 4]

$$\frac{\partial E}{\partial W_i} = \sum_{k=1}^{m} 2 \left( \frac{\partial e_k}{\partial W_i} \right) e_k = \sum_{k=1}^{m} 2 \times k_i \cdot e_k = 0 \quad \cdots (7)$$

When Xji and Yi are defined as in the following Formulas (8) and (9), Formula (7) can be represented in the form of a determinant as in the following Formula (10).

[Math. 5]

$$X_{ji} = \sum_{k=1}^{m} x_{ki} \times x_{kj} \qquad \cdots (8)$$

[Math. 6]

$$Y_i = \sum_{k=1}^{m} x_{ki} \times y_k \qquad \cdots (9)$$

[Math. 7]

$$\begin{pmatrix} X_{11} & X_{12} & \cdots & X_{1n} \\ X_{21} & X_{22} & \cdots & X_{2n} \\ \vdots & \vdots & \vdots & \vdots \\ X_{n1} & X_{n2} & \cdots & X_{nn} \end{pmatrix} \begin{pmatrix} W_1 \\ W_2 \\ \vdots \\ W_n \end{pmatrix} = \begin{pmatrix} Y_1 \\ Y_2 \\ \vdots \\ Y_n \end{pmatrix} \qquad \cdots (10)$$

In Formulas (8) to (10), xki represents an i-th pixel value among pixel values configuring the prediction tap on the true value of the prediction value yk', and Wi represents an i-th predictive coefficient which is multiplied by the i-th pixel value. Further, n represents the number of pixel values configuring the prediction tap, and m represents the number of samples for learning.

For example, a normal equation of Formula (10) can obtain a solution to the predictive coefficient Wi using a general matrix solution such as a sweep-out method (Gauss-Jordan's Elimination method).

As a result, learning of the optimum predictive coefficient Wi of each class and color component can be performed by solving the normal equation of Formula (10) for each class and color component.

The pixel value y can be obtained by a high-order formula of a second-order or higher rather than a linear first-order formula illustrated in Formula (3).

[Description of Processing of Image Processing Apparatus]

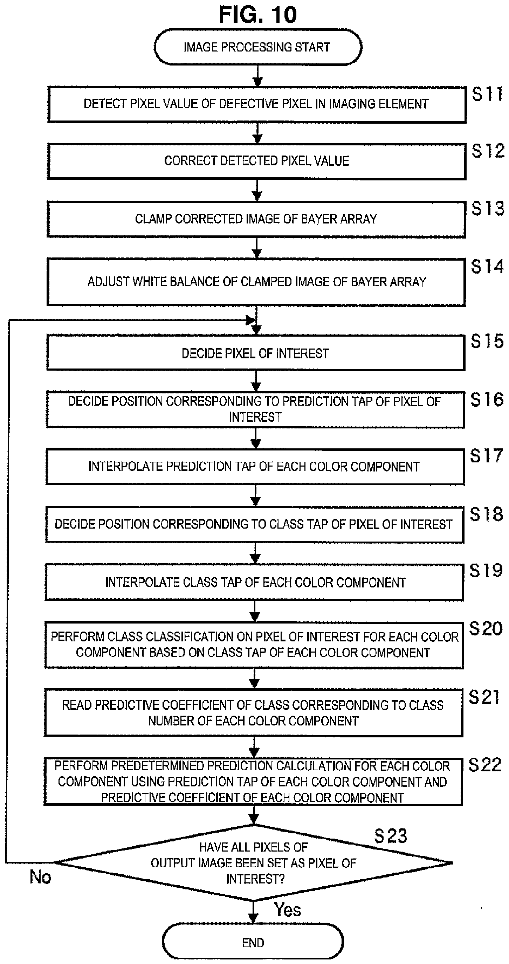

FIG. 10 is a flowchart for explaining image processing of the enlargement processing unit 31 of FIG. 4. For example, the image processing starts when the image of the Bayer array is supplied from the imaging element 11.

Referring to FIG. 10, in step S11, the defective pixel correcting unit 51 of the enlargement processing unit 31 detects a pixel value of a defective pixel in the imaging element 11 from the image of the Bayer array supplied from the imaging element 11 of FIG. 3.

In step S12, the defective pixel correcting unit 51 corrects the detected pixel value of the defective pixel in the imaging element 11 detected in step S11, for example, using a pixel value of a non-defective pixel therearound, and supplies the corrected image of the Bayer array to the clamp processing unit 52.

In step S13, the clamp processing unit 52 clamps the corrected image of the Bayer array supplied from the defective pixel correcting unit 51. The clamp processing unit 52 supplies the clamped image of the Bayer array to the white balance unit 53.

In step S14, the white balance unit 53 adjusts white balance by correcting gains of color components of the clamped image of the Bayer array supplied from the clamp processing unit 52. The white balance unit 53 supplies the image of the Bayer array whose white balance has been adjusted to the enlargement prediction processing unit 54.

In step S 15, the interpolating unit 71 (FIG. 5) of the enlargement prediction processing unit 54 decides the number of pixels of an output image to be predicted based on the enlargement rates in the horizontal direction and the vertical direction input from the outside, and decides a pixel which has not been set as a pixel of interest yet among pixels of the output image as a pixel of interest.

In step S16, the interpolating unit 71 decides the position, in the image of the Bayer array supplied from the white balance unit 53 of FIG. 4, corresponding to the prediction tap of the pixel of interest.

In step S 17, the interpolating unit 71 performs a predetermined interpolation process on the image of the Bayer array, and interpolates pixel values of color components present at the positions corresponding to the prediction tap as the prediction tap. The interpolating unit 71 supplies the prediction tap of each color component to the prediction calculation unit 76 through the prediction tap acquiring unit 72.

In step S18, the interpolating unit 71 decides the position, in the image of the Bayer array, corresponding to the class tap of the pixel of interest.

In step S 19, the interpolating unit 71 performs a predetermined interpolation process on the image of the Bayer array supplied from the white balance unit 53, and interpolates pixel values of color components present at the positions corresponding to the class tap as the class tap. The interpolating unit 71 supplies the class tap of each color component to the class number generating unit 74 through the class tap acquiring unit 73.

In step S20, the class number generating unit 74 performs class classification on the pixel of interest for each color component based on the class tap of each color component supplied from the class tap acquiring unit 73, generates a class number corresponding to the class obtained as the result, and supplies the generated class number to the coefficient generating unit 75.

In step S21, the coefficient generating unit 75 reads a predictive coefficient of the class corresponding to the class number of each color component supplied from the class number generating unit 74 among the stored predictive coefficients of each class and color component, and supplies the read predictive coefficient to the prediction calculation unit 76.

In step S22, the prediction calculation unit 76 performs a calculation of Formula (3) for each color component as a predetermined prediction calculation, using the prediction tap of each color component supplied from the prediction tap acquiring unit 72 and the predictive coefficient of each color component supplied from the coefficient generating unit 75. Thus, the prediction calculation unit 76 generates a prediction value of a pixel value of each color component of a pixel of interest as a pixel value of each color component of a pixel of interest of the output image, and outputs the generated pixel value.

In step S23, the interpolating unit 71 determines whether or not all pixels of the output image have been set as the pixel of interest. When it is determined in step S23 that not all pixels of the output image have been set as the pixel of interest yet, the process returns to step S 15, and the processes of steps S 15 to S23 are repeated until all pixels of the output image are set as the pixel of interest.

However, when it is determined in step S23 that all pixels of the output image have been set as the pixel of interest, the process ends.

As described above, the image processing apparatus 30 generates the prediction tap of each color component of the pixel of interest by enlarging the image of the Bayer array based on the enlargement rates input from the outside, and calculates a pixel value of each color component of a pixel of interest by performing a predetermined prediction calculation for each color component using the prediction tap and the predictive coefficient. That is, the image processing apparatus 30 directly generates the output image from the image of the Bayer array. Thus, compared to the image processing apparatus 10 of the related art that generates the output image through processing twice, the output image can be generated with a high degree of accuracy since the output image is not generated using a first processing result that may change the fine line portion, an edge of a color, or the like.

Further, compared to the image processing apparatus 10 of the related art, degradation in the accuracy of the output image can be prevented since it is unnecessary to temporarily store the first processing result.

Specifically, in the image processing apparatus 10 of the related art, since the output image is generated through processing twice, it is necessary to accumulate an RGB image which is the first processing result in a memory (not shown) by a pixel used for generating one pixel of the output image through second processing. Since the capacity of the memory is realistically finite, it is possible for a bit number of a pixel value of each pixel of an RGB image which is the first processing result to need to be reduced, and in this case, the accuracy of the output image is degraded. On the other hand, the image processing apparatus 30 directly generates the output image from the image of the Bayer array and thus need not store the interim result of the process. Accordingly, degradation in the accuracy of the output image can be prevented.

In addition, since the number of blocks for performing the class classification adaptive process is one, the image processing apparatus 30 can reduce the circuit size compared to the image processing apparatus 10 of the related art including a block for performing the class classification adaptive process for the demosaicing process and a block for performing the class classification adaptive process for the enlargement process.

[Exemplary Configuration of Learning Apparatus]

FIG. 11 is a block diagram illustrating an exemplary configuration of a learning apparatus 100 that learns the predictive coefficient Wi stored in the coefficient generating unit 75 of FIG. 5.

The learning apparatus 100 of FIG. 11 includes a teacher image storage unit 101, a reduction processing unit 102, a thinning processing unit 103, an interpolating unit 104, a prediction tap acquiring unit 105, a class tap acquiring unit 106, a class number generating unit 107, an adding unit 108, and a predictive coefficient calculation unit 109.

A teacher image is input to the learning apparatus 100 as a learning image used for learning of the predictive coefficient Wi. Here, an ideal output image generated by the enlargement prediction processing unit 54 of FIG. 5, i.e., an RGB image of a high accuracy having the same resolution as the output image is used as the teacher image.

The teacher image storage unit 101 stores the teacher image. The teacher image storage unit 101 divides the stored teacher image into blocks each including a plurality of pixels, and sequentially sets each block as a block of interest. The teacher image storage unit 101 supplies a pixel value of each color component of a block of interest to the adding unit 108.

The reduction processing unit 102 reduces the teacher image in the horizontal direction and the vertical direction at predetermined reduction rates in the horizontal direction and the vertical direction, and supplies the reduced teacher image to the thinning processing unit 103.

The thinning processing unit 103 thins out a pixel value of a predetermined color component among pixel values of color components of the reduced teacher image supplied from the reduction processing unit 102 according to the Bayer array, and generates an image of a Bayer array. The thinning processing unit 103 performs a filter process corresponding to a process of an optical low pass filter (not shown) included in the imaging element 11 on the generated image of the Bayer array. Thus, it is possible to generate the image of the Bayer array approximated by the image of the Bayer array generated by the imaging element 11. The thinning processing unit 103 supplies the image of the Bayer array that has been subjected to the filter process to the interpolating unit 104 as a student image corresponding to the teacher image.

The interpolating unit 104 functions as the enlargement processing unit, and decides the position of each pixel of a block of interest in the student image supplied from the thinning processing unit 103 based on the enlargement rates in the horizontal direction and the vertical direction in the reduction processing unit 102. Then, the interpolating unit 104 sets each pixel of the block of interest to a pixel of interest, and decides the positions corresponding to the prediction tap of the pixel of interest and the positions corresponding to the class tap, similarly to the interpolating unit 71 of FIG. 5. The interpolating unit 104 performs the same interpolation process as in the interpolating unit 71 on the student image, and interpolates the prediction tap and the class tap of each color component of the block of interest. Then, the interpolating unit 104 supplies the prediction tap of each color component of each pixel of the block of interest to the prediction tap acquiring unit 105, and supplies the class tap to the class tap acquiring unit 106.

The prediction tap acquiring unit 105 acquires the prediction tap of each color component of each pixel of the block of interest supplied from the interpolating unit 104, and supplies the acquired prediction tap to the adding unit 108.

The class tap acquiring unit 106 acquires the class tap of each color component of each pixel of the block of interest supplied from the interpolating unit 104, and supplies the acquired class tap to the class number generating unit 107.

The class number generating unit 107 performs the class classification on each pixel of the block of interest for each color component based on the class tap of each color component of each pixel of the block of interest supplied from the class tap acquiring unit 106, similarly to the class number generating unit 74 of FIG. 5. The class number generating unit 107 generates a class number corresponding to a class of each pixel of the block of interest obtained as the result, and supplies the class number to the adding unit 108.

The adding unit 108 adds the pixel value of each color component of the block of interest from the teacher image storage unit 101 to the prediction tap of each color component of the block of interest from the prediction tap acquiring unit 105 for each class of the class number of the block of interest from the class number generating unit 107 and color component.

Specifically, the adding unit 108 calculates Xij in a matrix at the left side of Formula (10) for each class and color component using Xki and xkj (i,j=1,2,---,n) as the pixel value of each pixel of the prediction tap of each pixel of the block of interest.

The adding unit 108 sets a pixel value of each color component of each pixel of the block of interest to yk, and calculates Yi in a matrix at the right side of Formula (10) using the pixel value Xki for each class and color component.

Then, the adding unit 108 supplies the normal equation of Formula (10) of each class and color component, which is generated by performing the addition process using all blocks of all teacher images as the block of interest, to the predictive coefficient calculation unit 109.

The predictive coefficient calculation unit 109 functions as a learning unit, calculates the optimum predictive coefficient Wi for each class and color component by solving the normal equation of each class and color component supplied from the adding unit 108, and outputs the calculated optimum predictive coefficient Wi. The optimum predictive coefficient Wi of each class and color component is stored in the coefficient generating unit 75 of FIG. 5.

[Description of Processing of Learning Apparatus]

FIG. 12 is a flowchart for explaining a learning process of the learning apparatus 100 of FIG. 11. For example, the learning process starts when an input of the teacher image starts.

Referring to FIG. 12, in step S41, the reduction processing unit 102 of the learning apparatus 100 reduces the teacher image in the horizontal direction and the vertical direction at predetermined reduction rates in the horizontal direction and the vertical direction, and supplies the reduced teacher image to the thinning processing unit 103.

In step S42, the thinning processing unit 103 thins out a pixel value of a predetermined color component among pixel values of color components of the reduced teacher image supplied from the reduction processing unit 102 according to the Bayer array, and generates an image of a Bayer array. Further, the thinning processing unit 103 performs a filter process corresponding to a process of an optical low pass filter (not shown) included in the imaging element 11 on the generated image of the Bayer array. The thinning processing unit 103 supplies the image of the Bayer array that has been subjected to the filter process to the interpolating unit 104 as a student image corresponding to the teacher image.

In step S43, the teacher image storage unit 101 stores the input teacher image, divides the stored teacher image into blocks each including a plurality of pixels, and decides a block that has not been set as a block of interest yet among the blocks as a block of interest.

In step S44, the teacher image storage unit 101 reads the pixel value of each color component of the stored block of interest, and supplies the read pixel value to the adding unit 108.

In step S45, the interpolating unit 104 decides the positions in the student image supplied from the thinning processing unit 103 corresponding to the prediction tap of the pixels of the block of interest.

In step S46, the interpolating unit 104 performs the same interpolation process as in the interpolating unit 71 on the student image, and interpolates the prediction tap and the class tap of each color component of the block of interest. Then, the interpolating unit 104 supplies the prediction tap of each color component of each pixel of the block of interest to the adding unit 108 through the prediction tap acquiring unit 105.

In step S47, the interpolating unit 104 decides the positions, in the student image, corresponding to the class tap of the pixels of the block of interest.

In step S48, the interpolating unit 104 performs the same interpolation process as in the interpolating unit 71 on the student image, and interpolates the class tap of each color component of the block of interest. Then, the interpolating unit 104 supplies the class tap of each color component of each pixel of the block of interest to the class number generating unit 107 through the class tap acquiring unit 106.

In step S49, the class number generating unit 107 performs the class classification on each pixel of the block of interest for each color component based on the class tap of each color component of each pixel of the block of interest supplied from the class tap acquiring unit 106, similarly to the class number generating unit 74 of FIG. 5. The class number generating unit 107 generates a class number corresponding to a class of each pixel of the block of interest obtained as the result, and supplies the class number to the adding unit 108.

In step S50, the adding unit 108 adds the pixel value of each color component of the block of interest from the teacher image storage unit 101 to the prediction tap of each color component of the block of interest from the prediction tap acquiring unit 105 for each class of the class number of the block of interest from the class number generating unit 107 and color component.

In step S51, the adding unit 108 determines whether or not all blocks of the teacher image have been set as the block of interest. When it is determined in step S51 that not all blocks of the teacher image have been set as the block of interest yet, the process returns to step S43, and the processes of steps S43 to S51 are repeated until all blocks are set as the block of interest.

However, when it is determined in step S51 that all blocks of the teacher image have been set as the block of interest, the process proceeds to step S52. In step S52, the adding unit 108 determines whether or not an input of the teacher image has ended, that is, whether or not there are no longer any new teacher images being input to the learning apparatus 100.

When it is determined in step S52 that an input of the teacher image has not ended, that is, when it is determined that a new teacher image is input to the learning apparatus 100, the process returns to step S41, and the processes of steps S41 to S52 are repeated until new teacher images are no longer input.

However, when it is determined in step S52 that an input of the teacher image has ended, that is, when it is determined that that new teacher images are no longer input to the learning apparatus 100, the adding unit 108 supplies the normal equation of Formula (10) of each class and color component, which is generated by performing the addition process in step S50, to the predictive coefficient calculation unit 109.

Then, in step S53, the predictive coefficient calculation unit 109 solves the normal equation of Formula (10) of each color component of a predetermined class among normal equations of Formula (10) of each class and color component supplied from the adding unit 108. As a result, the predictive coefficient calculation unit 109 calculates the optimum predictive coefficient Wi for each color component of the predetermined class, and outputs the calculated optimum predictive coefficient Wi.

In step S54, the predictive coefficient calculation unit 109 determines whether or not the normal equation of Formula (10) of each color component of all classes has been solved. When it is determined in step S54 that the normal equations of Formula (10) of respective color components have not been solved for all classes, the process returns to step S53, and the predictive coefficient calculation unit 109 solves the normal equation of Formula (10) of each color component of a class which has not been solved and then performs the process of step S54.

However, when it is determined in step S54 that the normal equations of Formula (10) of respective color components of all classes have been solved, the process ends.

As described above, the learning apparatus 100 generates the prediction tap of each color component of each pixel of the block of interest of the teacher image corresponding to the output image by enlarging the student image corresponding to the image of the Bayer array input to the enlargement prediction processing unit 54 of FIG. 5 based on predetermined enlargement rates in the horizontal direction and the vertical direction. Then, the learning apparatus 100 obtains the predictive coefficient by solving the normal equation of each color component using the pixel value of each pixel of the block of interest and the prediction tap. As a result, the learning apparatus 100 can learn the predictive coefficient for generating the output image in the enlargement prediction processing unit 54 of FIG. 5 with a high degree of accuracy.

Further, arbitrary values may be used as the reduction rates in the horizontal direction and the vertical direction in the reduction processing unit 102.

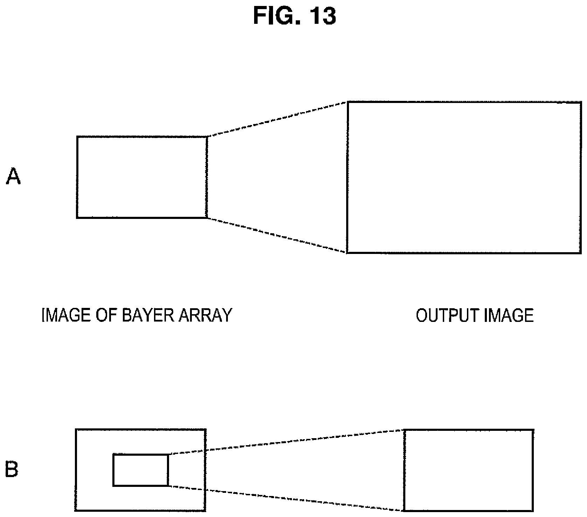

Further, in the above description, the enlargement processing unit 31 generates the output image from the whole image of the Bayer array as illustrated in FIG. 13A. However, the enlargement processing unit 31 may generate the output image from a predetermined range (a range surrounded by a dotted line in FIG. 13B) of the image of the Bayer array as illustrated in FIG. 13B. That is, the enlargement processing unit 31 may zoom in on the image of the Bayer array without enlarging the image of the Bayer array. In this case, the output image becomes an RGB image, corresponding to an image of a Bayer array, in which a predetermined range of the image of the Bayer array generated by the imaging element 11 is enlarged to the entire size of the output image. For example, the predetermined range may be input from the outside by the user or the like.

Further, in the above description, the class tap and the prediction tap are interpolated for each color component. However, the class tap and the prediction tap which are common to all color components may be interpolated. However, the predictive coefficient is obtained for each color component.

In the example, the class tap is configured with pixel values of the image of the Bayer array interpolated by the interpolating unit 71 or pixel values of the student image interpolated by the interpolating unit 104. However, the class tap may be configured with pixel values of the non-interpolated image of the Bayer array or pixel values of the non-interpolated student image.

Further, in the example, the interpolating unit 71 of FIG. 5 performs a predetermined interpolation process for each pixel of interest, and generates the prediction tap and the class tap of each color component. However, the interpolating unit 71 may be configured to enlarge the whole image of the Bayer array by performing the interpolation process for each color component and then extract the prediction tap and the class tap of each color component from the enlarged image of the Bayer array of each color component. Further, the interpolating unit 71 may be configured to enlarge the whole image of the Bayer array by the interpolation process and then extract the prediction tap and class tap which are common to all color components from the enlarged image of the Bayer array. In these cases, the interpolating unit 104 of FIG. 11 performs the same process as the interpolating unit 71 of FIG. 5.

< Embodiment of the present invention>

[Exemplary Configuration of Image Processing Apparatus]

A configuration of an image processing apparatus according to the embodiment of the present technology is the same as the image processing apparatus 30 of FIG. 3 except a configuration of the enlargement prediction processing unit 54, and so a description will be made in connection with a configuration of the enlargement prediction processing unit 54.

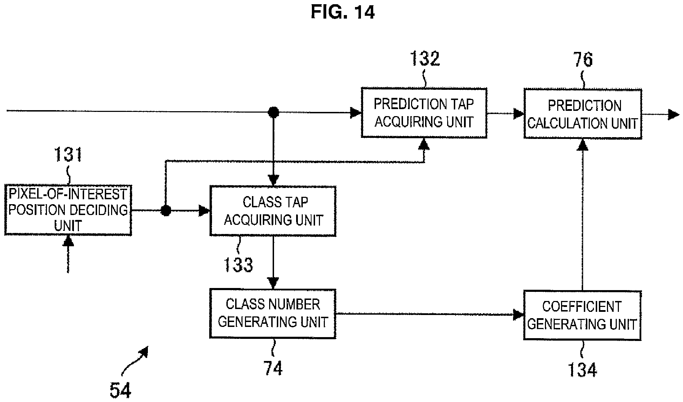

FIG. 14 is a block diagram illustrating an exemplary configuration of the enlargement prediction processing unit 54 of the image processing apparatus according to the embodiment of the present technology.

Among components illustrated in FIG. 14, the same components as the components illustrated in FIG. 5 are denoted by the same reference numerals, and the redundant description thereto will be appropriately omitted.

The configuration of the enlargement prediction processing unit 54 of FIG. 14 is mainly different from the configuration of FIG. 5 in that a pixel-of-interest position deciding unit 131 is newly provided, and a prediction tap acquiring unit 132, a class tap acquiring unit 133, and a coefficient generating unit 134 are provided instead of the prediction tap acquiring unit 72, the class tap acquiring unit 73, and the coefficient generating unit 75, respectively. The enlargement prediction processing unit 54 of FIG. 14 generates the output image without performing a predetermined interpolation process on the image of the Bayer array.

Specifically, the pixel-of-interest position deciding unit 131 of the enlargement prediction processing unit 54 decides the positions of pixels of an output image to be predicted in the image of the Bayer array supplied from the white balance unit 53 of FIG. 4 based on the enlargement rates in the horizontal direction and the vertical direction input from the outside. The pixel-of-interest position deciding unit 131 sequentially sets each of the pixels of the output image as a pixel of interest. The pixel-of-interest position deciding unit 131 sets the position of the pixel of interest in the image of the Bayer array as the pixel-of-interest position, and supplies the pixel-of interest position to the prediction tap acquiring unit 132 and the class tap acquiring unit 133.

The prediction tap acquiring unit 132 acquires the prediction tap from the image of the Bayer array supplied from the white balance unit 53 based on the pixel-of-interest position supplied from the pixel-of-interest position deciding unit 131. Specifically, the prediction tap acquiring unit 132 sets a pixel of the image of the Bayer array closest to the pixel-of-interest position as a center pixel, and acquires pixel values of pixels of the image of the Bayer array spatially having a predetermined positional relation on the center pixel as the prediction tap. The prediction tap acquiring unit 132 supplies the prediction tap to the prediction calculation unit 76.

The class tap acquiring unit 133 acquires the class tap from the image of the Bayer array supplied from the white balance unit 53 based on the pixel-of-interest position supplied from the pixel-of-interest position deciding unit 131. Specifically, the class tap acquiring unit 133 sets a pixel of the image of the Bayer array closest to the pixel-of-interest position as a center pixel (a pixel closest to a pixel of interest), and acquires pixel values of pixels of the image of the Bayer array spatially having a predetermined positional relation on the center pixel as the class tap. The class tap acquiring unit 133 supplies the class tap to the class number generating unit 74.

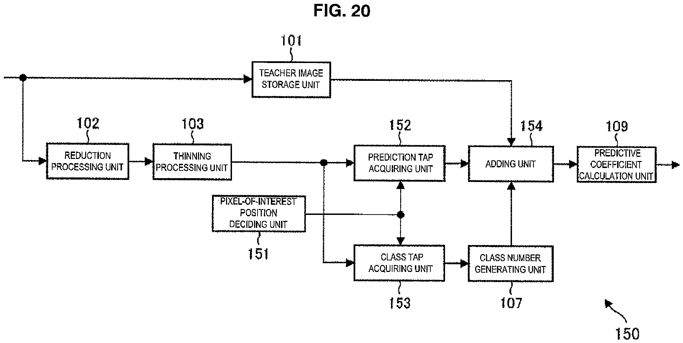

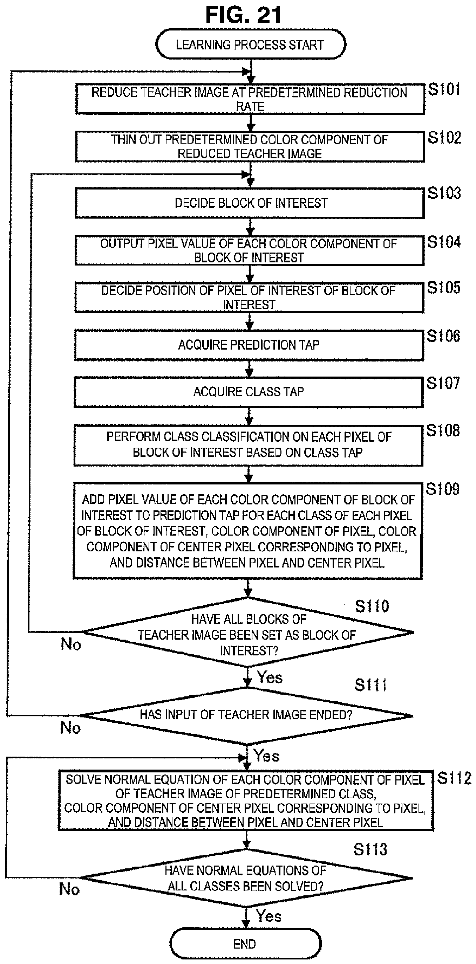

The coefficient generating unit 134 stores a predictive coefficient according to a color component of a pixel of interest, a class, a color component of a center pixel, and a distance between the pixel of interest and the center pixel which are obtained by learning which will be described later with reference to FIGS. 20 and 21. At this time, the coefficient generating unit 134 does not store the predictive coefficient as is. That is, the coefficient generating unit 134 reduces an amount of information by applying a data compression technique such as DCT, VQ, or DPCM or using polynomial approximation before storing the predictive coefficient. Thus, the coefficient generating unit 134 restores the original predictive coefficient when reading the predictive coefficient.

The coefficient generating unit 134 reads the predictive coefficient of each color component of the pixel of interest which corresponds to a class of a class number supplied from the class number generating unit 74, a color component of the center pixel, and a distance between the pixel of interest and the center pixel among the stored predictive coefficients. Then, the coefficient generating unit 134 supplies the read predictive coefficient of each color component of the pixel of interest to the prediction calculation unit 76.

[Example of Position of Each Pixel of Output Image]

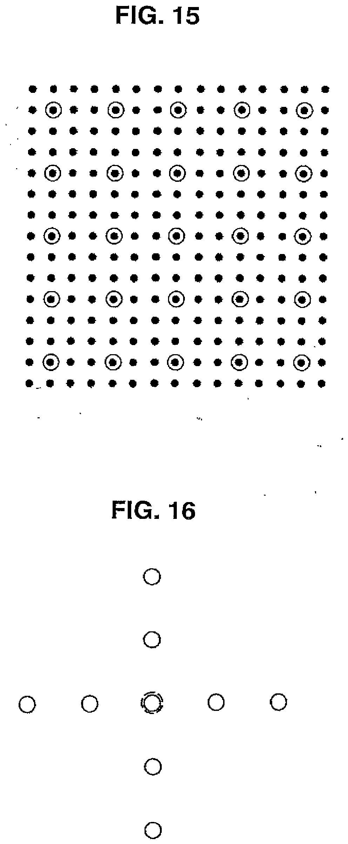

FIG. 15 is a diagram illustrating the position of each pixel of the output image when the enlargement rates in the horizontal direction and the vertical direction are triple.

In FIG. 15, a white circle represents the position of a pixel of the image of the Bayer array, and a black circle represents the position of a pixel of the output image.

As illustrated in FIG. 15, when the enlargement rates in the horizontal direction and the vertical direction are triple, an interval between the positions of the pixels of the output image in the horizontal direction is a third (1/3) of an interval between the positions of the pixels of the image of the Bayer array, in the horizontal direction, input to the enlargement prediction processing unit 54 of FIG. 14. Further, an interval between the positions of the pixels of the output image in the vertical direction is a third (1/3) of an interval between the positions of the pixels of the image of the Bayer array in the vertical direction input to the enlargement prediction processing unit 54.

[Example of Tap Structure of Class Tap]

FIG. 16 is a diagram illustrating an example of the tap structure of the class tap acquired by the class tap acquiring unit 133 of FIG. 14. The class tap may have a tap structure different from the structure illustrated in FIG. 16.

In FIG. 16, a dotted circle represents the center pixel. In FIG. 16, solid circles represent pixels of the image of the Bayer array corresponding to the class tap of the pixel of interest.

In the example of FIG. 16, a total of 9 pixel values of pixels of the image of the Bayer array at which 5 pixels are arranged centering on the center pixel in the horizontal direction and the vertical direction, respectively, are regarded as the class tap.

[Example of Tap Structure of Prediction Tap]

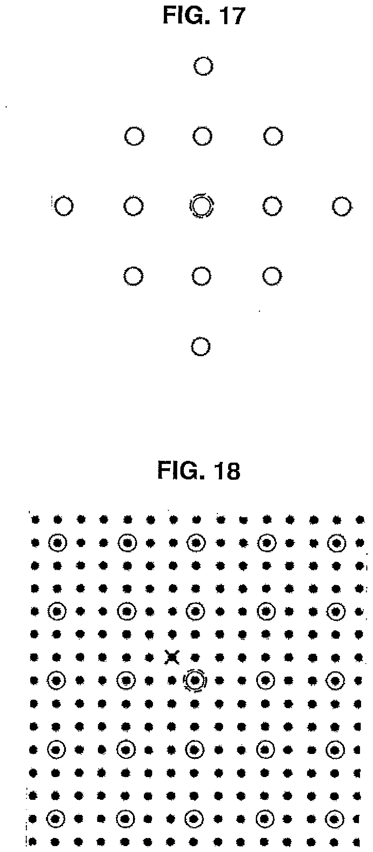

FIG. 17 is a diagram illustrating an example of the tap structure of the prediction tap acquired by the prediction tap acquiring unit 132 of FIG. 14. The prediction tap may have a tap structure different from the structure illustrated in FIG. 17.

In FIG. 17, a dotted circle represents the center pixel. Further, in FIG. 17, solid circles represent pixels of the image of the Bayer array corresponding to the prediction tap of the pixel of interest.

In the example of FIG. 17, pixel values of a total of 13 pixels including a total of 9 pixels of the image of the Bayer array at which 5 pixels are arranged centering on the center pixel in the horizontal direction and the vertical direction, respectively, and a total of 4 pixels of the image of the Bayer array at which 1 pixel is arranged above and below two adjacent pixels at the right and left sides of the center pixel among the pixels, respectively, are regarded as the prediction tap. That is, the pixels corresponding to the pixel values configuring the prediction tap are arranged in a diamond form.

[Description of Position of Center Pixel]

FIG. 18 is a diagram for explaining the position of the center pixel.

In FIG. 18, a dotted circle mark represents the position of the center pixel, and an x mark represents the position of the pixel of interest in the image of the Bayer array. Further, in FIG. 18, a white circle represents the position of a pixel of the image of the Bayer array, and a black circle represents the position of a pixel of the output image. Further, in the example of FIG. 18, the enlargement rates in the horizontal direction and the vertical direction are triple.

As illustrated in FIG. 18, the position of the center pixel is the position of a pixel of the image of the Bayer array closest to the position of the pixel of interest on the image of the Bayer array. Thus, a maximum value of an absolute value of a distance between the center pixel and the pixel of interest in the horizontal direction is half (1/2) an interval between the pixels of the image of the Bayer array in the horizontal direction. Similarly, a maximum value of an absolute value of a distance between the center pixel and the pixel of interest in the vertical direction is half (1/2) an interval between the pixels of the image of the Bayer array in the vertical direction.

[Description of Processing of Image Processing Apparatus]

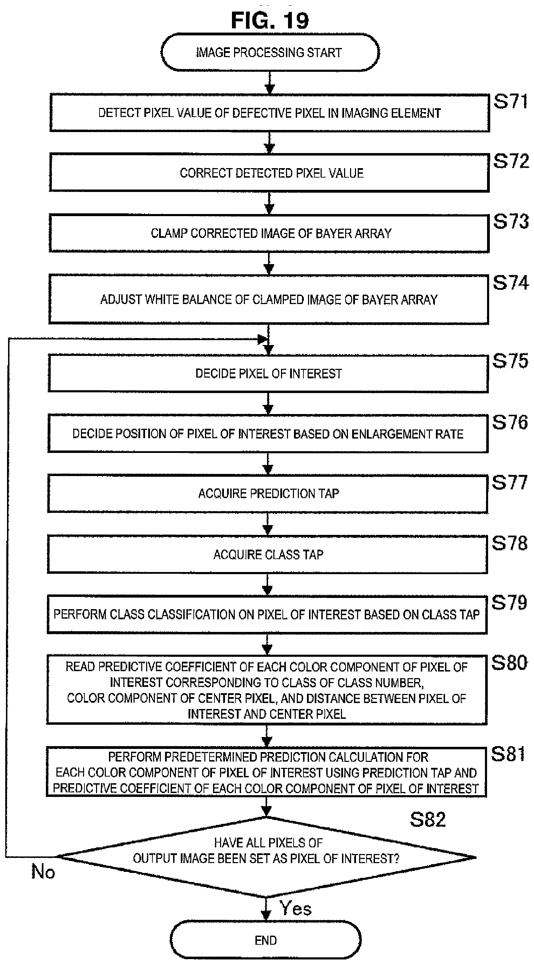

FIG. 19 is a flowchart for explaining image processing of the enlargement processing unit 31 of the image processing apparatus 3 according to the embodiment. For example, the image processing starts when the image of the Bayer array is supplied from the imaging element 11.

Referring to FIG. 19, the processes of steps S71 to S74 are the same as the processes of steps S11 to S14 of FIG. 10, and thus a description thereof will be omitted.

In step S75, the pixel-of-interest position deciding unit 131 (FIG. 14) of the enlargement prediction processing unit 54 decides the number of pixels of the output image to be predicted based on the enlargement rates in the horizontal direction and the vertical direction input from the outside, and decides a pixel that has not been set as the pixel of interest yet among pixels of the output image as the pixel of interest.

In step S76, the pixel-of-interest position deciding unit 131 decides the pixel-of-interest position based on the enlargement rates in the horizontal direction and the vertical direction input from the outside, and supplies the decided pixel-of-interest position to the prediction tap acquiring unit 132 and the class tap acquiring unit 133.

In step S77, the prediction tap acquiring unit 132 acquires the prediction tap from the image of the Bayer array supplied from the white balance unit 53 based on the pixel-of-interest position supplied from the pixel-of-interest position deciding unit 131. Then, the prediction tap acquiring unit 132 supplies the prediction tap to the prediction calculation unit 76.

In step S78, the class tap acquiring unit 133 acquires the class tap from the image of the Bayer array supplied from the white balance unit 53 based on the pixel-of-interest position supplied from the pixel-of-interest position deciding unit 131. Then, the class tap acquiring unit 133 supplies the class tap to the class number generating unit 74.

In step S79, the class number generating unit 74 performs the class classification on the pixel of interest based on the class tap supplied from the class tap acquiring unit 133, generates a class number corresponding to a class obtained as the result, and supplies the class number to the coefficient generating unit 134.

In step S80, the coefficient generating unit 134 reads the predictive coefficient of each color component of the pixel of interest which corresponds to the class of the class number supplied from the class number generating unit 74, the color component of the center pixel, and the distance between the pixel of interest and the center pixel among the stored predictive coefficients. Then, the coefficient generating unit 134 supplies the read predictive coefficient of each color component of the pixel of interest to the prediction calculation unit 76.

In step S81, the prediction calculation unit 76 performs a calculation of Formula (3) for each color component of the pixel of interest as a predetermined prediction calculation, using the prediction tap supplied from the prediction tap acquiring unit 132 and the predictive coefficient of each color component of the pixel of interest supplied from the coefficient generating unit 134. Thus, the prediction calculation unit 76 generates a prediction value of a pixel value of each color component of the pixel of interest as a pixel value of each color component of the pixel of interest of the output image, and outputs the generated pixel value.

In step S82, the pixel-of-interest position deciding unit 131 determines whether or not all pixels of the output image have been set as the pixel of interest. When it is determined in step S82 that not all pixels of the output image have been set as the pixel of interest yet, the process returns to step S75, and the processes of steps S75 to S82 are repeated until all pixels of the output image are set as the pixel of interest.

However, when it is determined in step S82 that all pixels of the output image have been set as the pixel of interest, the process ends.

As described above, the image processing apparatus 30 included in the enlargement prediction processing unit 54 of FIG. 14 performs a predetermined prediction calculation using the prediction tap including a pixel value of a pixel corresponding to the center pixel of the Bayer array and the predictive coefficient of each color component of the pixel of interest corresponding to the distance between the pixel of interest and the center pixel, and obtains a pixel value of each color component of the pixel of interest. That is, the image processing apparatus 30 included in the enlargement prediction processing unit 54 of FIG. 14 directly generates the output image from the image of the Bayer array. Thus, compared to the image processing apparatus 10 of the related art that generates the output image through processing twice, the output image can be generated with a high degree of accuracy since the output image is not generated using a first processing result in which the fine line portion, an edge of a color, or the like is likely to change.

Further, compared to the image processing apparatus 10 of the related art, the accuracy of the output image can be prevented from being degraded since it is unnecessary to temporarily store the first processing result. In addition, since the number of blocks for performing the class classification adaptive process is one, the image processing apparatus 30 included in the enlargement prediction processing unit 54 of FIG. 14 can reduce the circuit size compared to the image processing apparatus 10 of the related art including a block for performing the class classification adaptive process for the demosaicing process and a block for performing the class classification adaptive process for the enlargement process.

Furthermore, the enlargement prediction processing unit 54 of FIG. 14 stores the predictive coefficient of each distance between the pixel of interest and the center pixel rather than each enlargement rate. Thus, the memory capacity necessary for storing the predictive coefficient is smaller than when the predictive coefficient of each enlargement rate is stored. For example, the type of distance between the pixel of interest and the center pixel when the enlargement rate is double or quadruple is included in the type of distance between the pixel of interest and the center pixel when the enlargement rate is octuple. Thus, when the predictive coefficient when the enlargement rate is octuple is stored, the enlargement prediction processing unit 54 of FIG. 14 needs not store the predictive coefficient when the enlargement rate is double or quadruple.

Further, the enlargement prediction processing unit 54 of FIG. 14 needs not perform the interpolation process and thus can reduce the throughput compared to the enlargement prediction processing unit 54 of FIG. 5.

[Exemplary Configuration of Learning Apparatus]

FIG. 20 is a block diagram illustrating an exemplary configuration of a learning apparatus 150 that learns the predictive coefficient Wi stored in the coefficient generating unit 134 of FIG. 14.

Among components illustrated in FIG. 20, the same components as the components illustrated in FIG. 11 are denoted by the same reference numerals, and the redundant description thereof will be appropriately omitted.

A configuration of the learning apparatus 150 of FIG. 20 is mainly different form the configuration of FIG. 11 in that a pixel-of-interest position deciding unit 151 is newly provided, and a prediction tap acquiring unit 152, a class tap acquiring unit 153, and an adding unit 154 are provided instead of the prediction tap acquiring unit 105, the class tap acquiring unit 106, and the adding unit 108, respectively. The learning apparatus 150 learns the color component of the pixel of interest, the color component of the center pixel, the distance between the center pixel and the pixel of interest, and the predictive coefficient of each class of the pixel of interest.

Specifically, the pixel-of-interest position deciding unit 151 sets each pixel of a block of interest as a pixel of interest, decides the position of the pixel of interest on the student image as a pixel-of-interest position, and supplies the pixel-of-interest position to the prediction tap acquiring unit 152 and the class tap acquiring unit 153.

The prediction tap acquiring unit 152 acquires the prediction tap of the block of interest from the student image generated by the thinning processing unit 103 based on each pixel-of-interest position of the block of interest supplied from the pixel-of-interest position deciding unit 151. Specifically, the prediction tap acquiring unit 152 sets a pixel of the student image closest to the pixel-of-interest position as a center pixel at each pixel-of-interest position, and acquires a pixel value of a pixel of the student image spatially having a predetermined positional relation on the center pixel as the prediction tap. The prediction tap acquiring unit 152 supplies the prediction tap of the block of interest to the adding unit 154.

The class tap acquiring unit 153 acquires the class tap of the block of interest from the student image generated by the thinning processing unit 103 based on each pixel-of-interest position of the block of interest supplied from the pixel-of-interest position deciding unit 151. Specifically, the class tap acquiring unit 153 sets a pixel of the student image closest to the pixel-of-interest position as a center pixel at each pixel-of-interest position, and acquires a pixel value of a pixel of the student image having a spatially predetermined position relation on the center pixel as the class tap. The class tap acquiring unit 153 supplies the class tap of the block of interest to the class number generating unit 107.

The adding unit 154 adds the pixel value of each color component of the block of interest from the teacher image storage unit 101 to the prediction tap of the block of interest from the prediction tap acquiring unit 152 for each class of the class number of each pixel of the block of interest from the class number generating unit 107, each color component of the pixel, each color component of the center pixel corresponding to the pixel, and each distance between the pixel and the center pixel.

Then, the adding unit 154 supplies the normal equation of Formula (10) for each class of a pixel of the teach image, each color component of the center pixel corresponding to the pixel, and each distance between the pixel and the center pixel, which are generated by performing the addition process using all blocks of all teacher images as the block of interest, to the predictive coefficient calculation unit 109.

[Description of Processing of Learning Apparatus]

FIG. 21 is a flowchart for explaining a learning process of the learning apparatus 150 of FIG. 20. For example, the learning process starts when an input of the teacher image starts.

The processes of steps S101 to S104 of FIG. 21 are the same as the processes of steps S41 to S41 of FIG. 12, and a description thereof will be omitted.

In step S105, the pixel-of-interest position deciding unit 151 sets each pixel of a block of interest as a pixel of interest, decides the position of the pixel of interest on the student image as a pixel-of-interest position, and supplies the pixel-of-interest position to the prediction tap acquiring unit 152 and the class tap acquiring unit 153.

In step S106, the prediction tap acquiring unit 152 acquires the prediction tap of the block of interest from the student image generated by the thinning processing unit 103 based on each pixel-of-interest position of the block of interest supplied from the pixel-of-interest position deciding unit 151. Then, the prediction tap acquiring unit 152 supplies the prediction tap of the block of interest to the adding unit 154.

In step S107, the class tap acquiring unit 153 acquires the class tap of the block of interest from the student image generated by the thinning processing unit 103 based on each pixel-of-interest position of the block of interest supplied from the pixel-of-interest position deciding unit 151. Then, the class tap acquiring unit 153 supplies the class tap of the block of interest to the class number generating unit 107.

In step S108, the class number generating unit 107 performs the class classification on each pixel of the block of interest based on the class tap of the block of interest supplied from the class tap acquiring unit 153, similarly to the class number generating unit 74 of FIG. 14. The class number generating unit 107 generates a class number corresponding to a class of each pixel of the block of interest obtained as the result, and supplies the class number to the adding unit 154.

In step S109, the adding unit 154 adds the pixel value of each color component of the block of interest from the teacher image storage unit 101 to the prediction tap of the block of interest from the prediction tap acquiring unit 152 for each class of the class number of each pixel of the block of interest from the class number generating unit 107, each color component of the pixel, each color component of the center pixel corresponding to the pixel, and each distance between the pixel and the center pixel.

The processes of steps S110 and S111 are the same as the processes of steps S51 and S52. When it is determined in step S111 that an input of the teacher image has ended, the adding unit 154 supplies a normal equation of Formula (10) of each class of a pixel of the teacher image, each color component of the pixel, each color component of the center pixel corresponding to the pixel, and each distance between the pixel and the center pixel, which is generated by performing the addition process in step S109, to the predictive coefficient calculation unit 109.

Then, in step S112, the predictive coefficient calculation unit 109 solves the normal equation of Formula (10) of each color component of a pixel of the teacher image of a predetermined class, each color component of the center pixel corresponding to the pixel, and each distance between the pixel and the center pixel among the normal equations of Formula (10) supplied from the adding unit 154. As a result, the predictive coefficient calculation unit 109 obtains the optimum predictive coefficient Wi of each color component of a pixel of the teacher image of a predetermined class, each color component of the center pixel corresponding to the pixel, and each distance between the pixel and the center pixel, and outputs the optimum predictive coefficient Wi.

In step S113, the predictive coefficient calculation unit 109 determines whether or not the normal equations of Formula (10) of each color component of a pixel of the teacher image of all classes, each color component of the center pixel corresponding to the pixel, and each distance between the pixel and the center pixel have been solved.

When it is determined in step S 113 that not all of the normal equations of Formula (10) of each color component of a pixel of the teacher image of all classes, each color component of the center pixel corresponding to the pixel, and each distance between the pixel and the center pixel have been solved, the process returns to step S112. Then, the predictive coefficient calculation unit 109 solves the normal equations of Formula (10) of each color component of a pixel of the teacher image of a class which has not been solved yet, each color component of the center pixel corresponding to the pixel, and each distance between the pixel and the center pixel, and the process proceeds to step S 113.

However, when it is determined in step S113 that the normal equations of Formula (10) of each color component of a pixel of the teacher image of all classes, each color component of the center pixel corresponding to the pixel, and each distance between the pixel and the center pixel have been solved, the process ends.

As described above, the learning apparatus 150 obtains the predictive coefficient by solving the normal equation for each color component of a pixel of the teacher image and each distance between the pixel and the center pixel using the pixel value of each pixel of the teacher image corresponding to the output image and the prediction tap including the pixel value of the student image corresponding to the image of the Bayer array input to the enlargement prediction processing unit 54 of FIG. 14. As a result, the learning apparatus 150 can learn the predictive coefficient for generating the output image in the enlargement prediction processing unit 54 of FIG. 14 with a high degree of accuracy.

Further, in the learning apparatus 100 (150), the addition process is performed for each block of interest, but the addition process may be performed for each pixel of interest using each pixel of the teacher image as the pixel of interest.

The enlargement prediction processing unit 54 of FIG. 5 or 14 may generate an enlarged image of the Bayer array rather than an enlarged RGB image as the output image. In this case, a color component of the pixel of interest is decided according to the Bayer array, and only a pixel value of the color component is predicted. Further, an array of each color component of the output image may be a Bayer array identical to or different from an image of a Bayer array input from the imaging element 11. Further, an array of each color component of the output image may be designated from the outside by the user.

Furthermore, in the above description, an image of a Bayer array is generated by the imaging element 11, but an array of each color component of an image generated by the imaging element 11 may not be the Bayer array.

Further, in the above description, the output image is an RGB image, but the output image may be a color image other than an RGB image. In other words, color components of the output image are not limited to the R component, the G component, and the B component.

[Description of Computer According to Present Technology]

Next, a series of processes described above may be performed by hardware or software. When a series of processes is performed by software, a program configuring the software is installed in a general-purpose computer or the like.

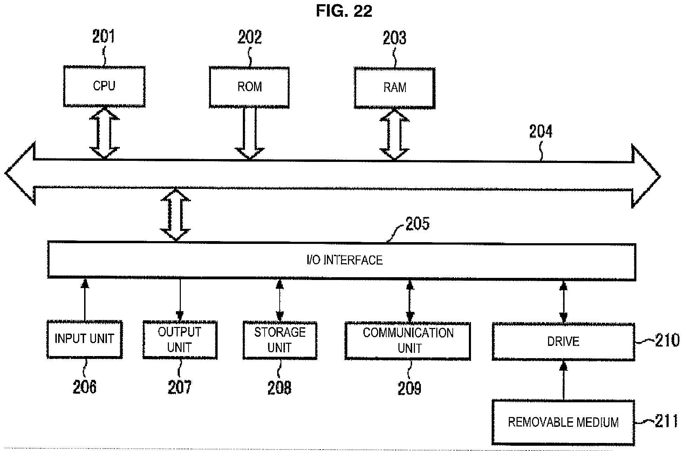

FIG. 22 illustrates an exemplary configuration of a computer in which a program for executing a series of processes described above is installed.

The program may be recorded in a storage unit 208 or a read only memory (ROM) 202 functioning as a storage medium built in the computer in advance.

Alternatively, the program may be stored (recorded) in a removable medium 211. The removable medium 211 may be provided as so-called package software. Examples of the removable medium 211 include a flexible disk, a compact disc read only memory (CD-ROM), a magneto optical (MO) disc, a digital versatile disc (DVD), a magnetic disk, and a semiconductor memory.

Further, the program may be installed in the computer from the removable medium 211 through a drive 210. Furthermore, the program may be downloaded to the computer via a communication network or a broadcast network and then installed in the built-in storage unit 208. In other words, for example, the program may be transmitted from a download site to the computer through a satellite for digital satellite broadcasting in a wireless manner, or may be transmitted to the computer via a network such as a local area network (LAN) or the Internet in a wired manner.

The computer includes a central processing unit (CPU) 201 therein, and an I/O interface 205 is connected to the CPU 201 via a bus 204.

When the user operates an input unit 206 and an instruction is input via the I/O interface 205, the CPU 201 executes the program stored in the ROM 202 in response to the instruction. Alternatively, the CPU 201 may load the program stored in the storage unit 208 to a random access memory (RAM) 203 and then execute the loaded program.

In this way, the CPU 201 performs the processes according to the above-described flowcharts, or the processes performed by the configurations of the above-described block diagrams. Then, the CPU 201 outputs the processing result from an output unit 207, or transmits the processing result from a communication unit 209, for example, through the I/O interface 205, as necessary. Further, the CPU 201 records the processing result in the storage unit 208.

The input unit 206 is configured with a keyboard, a mouse, a microphone, and the like. The output unit 207 is configured with a liquid crystal display (LCD), a speaker, and the like.

In the present disclosure, a process which a computer performs according to a program need not necessarily be performed in time series in the order described in the flowcharts. In other words, a process which a computer performs according to a program also includes a process which is executed in parallel or individually (for example, a parallel process or a process by an object).

Further, a program may be processed by a single computer (processor) or may be distributedly processed by a plurality of computers. Furthermore, a program may be transmitted to a computer at a remote site and then executed.

It should be understood by those skilled in the art that various modifications, combinations, sub-combinations and alterations may occur depending on design requirements and other factors insofar as they are within the scope of the appended claims.

Additionally, the present technology may also be configured as below.

(1)
An image processing apparatus, including:

a prediction calculation unit that calculates a pixel value of a pixel of interest which is a pixel attracting attention in a predetermined color image corresponding to a predetermined image of a Bayer array enlarged at a second enlargement rate for each color component by a calculation of a predictive coefficient learned by solving a formula representing a relation among a pixel value of each pixel of a teacher image corresponding to a color image including pixel values of a plurality of predetermined color components of pixels of an image of a Bayer array enlarged at a first enlargement rate, a pixel value of a pixel of a student image which corresponds to the pixel and is enlarged at the first enlargement rate, and the predictive coefficient and a prediction tap that includes a pixel value of a pixel of the predetermined image of the Bayer array enlarged at the second enlargement rate, which corresponds to the pixel of interest, for each color component of each pixel of the teacher image, using the teacher image and the student image corresponding to the image of the Bayer array, and outputs the predetermined color image including the pixel value of the pixel of interest of each color component.

(2)
The image processing apparatus according to (1), further including
an enlargement processing unit that enlarges the predetermined image of the Bayer array based on the second enlargement rate,
wherein the prediction calculation unit calculates the pixel value of the pixel of interest for each color component by the calculation of the predictive coefficient of each color component and the prediction tap that includes the pixels of the predetermined image of the Bayer array enlarged at the second enlargement rate by the enlargement processing unit, which corresponds to the pixel of interest.

(3)

The image processing apparatus according to (2), wherein
the enlargement processing unit enlarges a part of the predetermined image of the Bayer array for each pixel of interest based on the second enlargement rate, and generates the prediction tap.

(4)

The image processing apparatus according to (2) or (3),
wherein the enlargement processing unit performs enlargement by interpolating a pixel value of the predetermined image of the Bayer array of a corresponding color component for each color component based on the second enlargement rate, and
the prediction calculation unit calculates the pixel value of the pixel of interest for each color component by the calculation of each color component of the predictive coefficient of each color component and the prediction tap that includes the pixel value of the pixel of the predetermined image of the Bayer array enlarged for each color component by the enlargement processing unit, which corresponds to the pixel of interest.

(5)

The image processing apparatus according to any one of (1) to (4), further including
a prediction tap acquiring unit that acquires a pixel value of a pixel of the predetermined image of the Bayer array enlarged at the second enlargement rate which corresponds to the pixel of interest as the prediction tap,
wherein the prediction calculation unit calculates the pixel value of the pixel of interest for each color component by the calculation of the predictive coefficient of each color component and the prediction tap acquired by the prediction tap acquiring unit.

(6)

The image processing apparatus according to (1), further including:

a class tap acquiring unit that acquires a pixel value of a pixel of the predetermined image of the Bayer array enlarged at the second enlargement rate which corresponds to the pixel of interest as a class tap used for performing class classification for classifying the pixel of interest into any one of a plurality of classes; and
a class classifying unit that performs class classification on the pixel of interest based on the class tap acquired by the class tap acquiring unit,
wherein the predictive coefficient is learned for each class and color component of each pixel of the teacher image, and
the prediction calculation unit calculates the pixel value of the pixel of interest for each color component by the calculation of the predictive coefficient of each color component corresponding to a class of the pixel of interest obtained as a result of class classification by the class classifying unit and the prediction tap.

(7)

The image processing apparatus according to (6), further including:

an enlargement processing unit that enlarges a part of the predetermined image of the Bayer array for each pixel of interest based on the second enlargement rate, and generates the prediction tap and the class tap; and
a prediction tap acquiring unit that acquires the prediction tap generated by the enlargement processing unit,
wherein the class tap acquiring unit acquires the class tap generated by the enlargement processing unit.

(8)

The image processing apparatus according to (6), further including:

an enlargement processing unit that performs enlargement by interpolating a pixel value of the predetermined image of the Bayer array of a corresponding color component for each color component based on the second enlargement rate; and
a prediction tap acquiring unit that acquires a pixel value of a pixel of the predetermined image of the Bayer array enlarged for each color component by the enlargement processing unit which corresponds to the pixel of interest as the prediction tap of a corresponding color component,
wherein the class tap acquiring unit acquires a pixel value of a pixel of the predetermined image of the Bayer array enlarged for each color component by the enlargement processing unit which corresponds to the pixel of interest as the class tap of a corresponding color component,
the class classifying unit performs class classification on the pixel of interest for each color component based on the class tap of each color component acquired by the class tap acquiring unit, and
the prediction calculation unit calculates the pixel value of the pixel of interest for each color component by the calculation of the predictive coefficient corresponding to a class of each color component of the pixel of interest obtained as a result of class classification by the class classifying unit and the prediction tap of each color component acquired by the prediction tap acquiring unit.

(9)

An image processing method, including:

calculating, at image processing apparatus, a pixel value of a pixel of interest which is a pixel attracting attention in a predetermined color image corresponding to a predetermined image of a Bayer array enlarged at a second enlargement rate by a calculation of a predictive coefficient learned by solving a formula representing a relation among a pixel value of each pixel of a teacher image corresponding to a color image including pixel values of a plurality of predetermined color components of pixels of an image of a Bayer array enlarged at a first enlargement rate, a pixel value of a pixel of a student image which corresponds to the pixel and is enlarged at the first enlargement rate, and the predictive coefficient and a prediction tap that includes a pixel value of a pixel of the predetermined image of the Bayer array enlarged at the second enlargement rate, which corresponds to the pixel of interest, for each color component of each pixel of the teacher image, using the teacher image and the student image corresponding to the image of the Bayer array, and outputting the predetermined color image including the pixel value of the pixel of interest of each color component.

(10)

A program causing a computer to execute:

calculating a pixel value of a pixel of interest which is a pixel attracting attention in a predetermined color image corresponding to a predetermined image of a Bayer array enlarged at a second enlargement rate by a calculation of a predictive coefficient learned by solving a formula representing a relation among a pixel value of each pixel of a teacher image corresponding to a color image including pixel values of a plurality of predetermined color components of pixels of an image of a Bayer array enlarged at a first enlargement rate, a pixel value of a pixel of a student image which corresponds to the pixel and is enlarged at the first enlargement rate, and the predictive coefficient and a prediction tap that includes a pixel value of a pixel of the predetermined image of the Bayer array enlarged at the second enlargement rate, which corresponds to the pixel of interest, for each color component of each pixel of the teacher image, using the teacher image and the student image corresponding to the image of the Bayer array, and outputting the predetermined color image including the pixel value of the pixel of interest of each color component.

(11)

A storage medium recording the program recited in (10).

(12)

A learning apparatus, including:

a learning unit that calculates a predictive coefficient of each color component by solving a formula representing a relation among a pixel value of each pixel of a teacher image, a prediction tap of the pixel, and the predictive coefficient for each color component of each pixel of the teacher image using the prediction tap including a pixel value of a pixel corresponding to a pixel of interest which is a pixel attracting attention in the teacher image which is a color image corresponding to an image obtained as a result of enlarging a student image which is used for learning of the predictive coefficient used for converting a predetermined image of a Bayer array into a predetermined color image including pixel values of a plurality of color components of pixels of the predetermined image of the Bayer array enlarged at a first enlargement rate and corresponds to the predetermined image of the Bayer array based on a second enlargement rate in the corresponding image and the pixel value of the pixel of interest.

(13)

An image processing apparatus, including:

a prediction calculation unit that calculates a pixel value of a pixel of interest which is a pixel attracting attention in a predetermined color image corresponding to a predetermined image of a Bayer array enlarged at a second enlargement rate for each color component by a calculation of a predictive coefficient corresponding to an inter-pixel-of-interest distance which is a distance between a position of the pixel of interest in the predetermined image of the Bayer array and a position of a pixel closest to the pixel of interest which is a pixel of the predetermined image of the Bayer array closest to the position among predictive coefficients learned by solving a formula representing a relation among a pixel value of each pixel of a teacher image corresponding to a color image including pixel values of a plurality of predetermined color components of pixels of an image of a Bayer array enlarged at a first enlargement rate, a pixel value of a pixel of a student image corresponding to the pixel, and the predictive coefficient and a prediction tap that includes a pixel value of a pixel of the predetermined image of the Bayer array and corresponds to the pixel of interest, for each color component of each pixel of the teacher image and each inter-pixel distance which is a distance between a position of each pixel of the teacher image in the student image and a position of a pixel of the student image closest to the position, using the teacher image and the student image corresponding to the image of the Bayer array, and outputs the predetermined color image including the pixel value of the pixel of interest of each color component.

(14)
The image processing apparatus according to (13),
wherein the predictive coefficient is learned for each color component of each pixel of the teacher image, each inter-pixel distance, and each color component of a pixel of the student image closest to a position of each pixel of the teacher image in the student image, and
the prediction calculation unit calculates the pixel value of the pixel of interest for each color component by the calculation of the predictive coefficient corresponding to the inter-pixel-of-interest distance and a color component of the pixel closest to the pixel of interest among the predictive coefficients and the prediction tap.

(15)
The image processing apparatus according to (13) or (14), further including:

a class tap acquiring unit that acquires a pixel value of a pixel of the predetermined image of the Bayer array which corresponds to the pixel closest to the pixel of interest as the prediction tap used for performing class classification for classifying the pixel of interest into any one of a plurality of classes; and

a class classifying unit that performs class classification on the pixel of interest based on the class tap acquired by the class tap acquiring unit,
wherein the predictive coefficient is learned for each class, each color component of each pixel of the teacher image, and each inter-pixel distance, and the prediction calculation unit calculates the pixel value of the pixel of interest for each color component by the calculation of the predictive coefficient that corresponds to a class of the pixel of interest obtained as a result of class classification by the class classifying unit and the inter-pixel-of-interest distance among the predictive coefficients and the prediction tap.

(16)
An image processing method, including:

calculating, at an image processing apparatus, a pixel value of a pixel of interest which is a pixel attracting attention in a predetermined color image corresponding to a predetermined image of a Bayer array enlarged at a second enlargement rate for each color component by a calculation of a predictive coefficient corresponding to an inter-pixel-of-interest distance which is a distance between a position of the pixel of interest in the predetermined image of the Bayer array and a position of a pixel closest to the pixel of interest which is a pixel of the predetermined image of the Bayer array closest to the position among predictive coefficients learned by solving a formula representing a relation among a pixel value of each pixel of a teacher image corresponding to a color image including pixel values of a plurality of predetermined color components of pixels of an image of a Bayer array enlarged at a first enlargement rate, a pixel value of a pixel of a student image corresponding to the pixel, and the predictive coefficient and a prediction tap that includes a pixel value of a pixel of the predetermined image of the Bayer array and corresponds to the pixel of interest, for each color component of each pixel of the teacher image and each inter-pixel distance which is a distance between a position of each pixel of the teacher image in the student image and a position of a pixel of the student image closest to the position, using the teacher image and the student image corresponding to the image of the Bayer array, and outputting the predetermined color image including the pixel value of the pixel of interest of each color component.

(17)
A program causing a computer to execute:

calculating a pixel value of a pixel of interest which is a pixel attracting attention in a predetermined color image corresponding to a predetermined image of a Bayer array enlarged at a second enlargement rate for each color component by a calculation of a predictive coefficient corresponding to an inter-pixel-of-interest distance which is a distance between a position of the pixel of interest in the predetermined image of the Bayer array and a position of a pixel closest to the pixel of interest which is a pixel of the predetermined image of the Bayer array closest to the position among predictive coefficients learned by solving a formula representing a relation among a pixel value of each pixel of a teacher image corresponding to a color image including pixel values of a plurality of predetermined color components of pixels of an image of a Bayer array enlarged at a first enlargement rate, a pixel value of a pixel of a student image corresponding to the pixel, and the predictive coefficient and a prediction tap that includes a pixel value of a pixel of the predetermined image of the Bayer array and corresponds to the pixel of interest, for each color component of each pixel of the teacher image and each inter-pixel distance which is a distance between a position of each pixel of the teacher image in the student image and a position of a pixel of the student image closest to the position, using the teacher image and the student image corresponding to the image of the Bayer array, and outputting the predetermined color image including the pixel value of the pixel of interest of each color component.

(18)

A storage medium recording the program recited in (17).

(19)

A learning apparatus, including:

a learning unit that calculates a predictive coefficient of each color component and each inter-pixel distance by solving a formula representing a relation among a pixel value of each pixel of a teacher image, a prediction tap of a corresponding pixel, and the predictive coefficient for each color component of each pixel of the teacher image and each inter-pixel distance which is a distance between a position of each pixel of the teacher image in a student image and a position of each pixel of the student image closest to the position using the prediction tap including a pixel value of a pixel corresponding to a pixel of interest which is a pixel attracting attention in the teacher image which is a color image including pixel values of a plurality of color components of each pixel of the student image enlarged at a second enlargement rate among student images which are used for learning of the predictive coefficient used for converting a predetermined image of a Bayer array into a predetermined color image including pixel values of a plurality of color components of pixels of the predetermined image of the Bayer array enlarged at a first enlargement rate and corresponds to the predetermined image of the Bayer array and the pixel value of the pixel of interest.

It should be understood by those skilled in the art that various modifications, combinations, sub-combinations and alterations may occur depending on design requirements and other factors insofar as they are within the scope of the appended claims.

The present disclosure contains subject matter related to that disclosed in Japanese Priority Patent Application JP 2011-113058 filed in the Japan Patent Office on May 20, 2011.

**Claims**

1. An image processing method performed by an image processing apparatus comprising a pixel-of-interest position deciding unit (131), a prediction tap acquiring unit (132), a class tap acquiring unit (133), a coefficient generating unit (134), a class number generating unit (74), a prediction calculation unit (76) and a white balance unit (53), the method comprising:

deciding, by the pixel-of-interest position deciding unit (131), a number of pixels of an output image to be predicted based on enlargement rates in a horizontal and vertical direction input from outside and deciding, by the pixel-of-interest position deciding unit (131), a pixel that has not been set as a pixel of interest yet among the pixels of the output image as the pixel of interest (S75);

deciding, by the pixel-of-interest position deciding unit (131), a position of the pixel of interest based on the enlargement rates in the horizontal direction and the vertical direction input from the outside, and supplying, by the pixel-of-interest position deciding unit (131), the decided pixel-of-interest position to the prediction tap acquiring unit (132) and the class tap acquiring unit (133) (S76);

acquiring, by the prediction tap acquiring unit (132), a prediction tap from an image supplied from the white balance unit (53), being used for adjusting a white balance by correcting gains of a clamped image of a Bayer array, based on the pixel-of-interest position supplied from the pixel-of-interest position deciding uni (131), wherein the prediction tap includes pixel values of pixels of a first predetermined pattern from the image supplied from the white balance unit (53) based on the pixel of interest position, and supplying, by the prediction tap acquiring unit (132), the prediction tap to the prediction calculation unit (76) (S77);

acquiring, by the class tap acquiring unit (133), a class tap from the image, supplied from the white balance unit (53), based on the pixel-of-interest position supplied from the pixel-of-interest position deciding unit (131), wherein the class tap includes pixel values of pixels of a second predetermined pattern from the image supplied from the white balance unit (53) based on the pixel of interest position, and supplying, by the class tap acquiring unit (133), the class tap to the class number generating unit (74) (S78);

performing, by the class number generating unit (74), a class classification on the pixel of interest based on the class tap supplied from the class tap acquiring unit (133), and generating, by the class number generating unit (74), a class number corresponding to a class obtained as the result, and supplying, by the class number generating unit (74), the class number to the coefficient generating unit (134) (S79);

reading, by the coefficient generating unit (134), a predicitve coefficient of each color component of the pixel of interest, which corresponds to the class of the class number supplied from the class number generating unit (74), a color component of a center pixel of the class tap, and a distance between the pixel of interest and the center pixel among stored predictive coefficients, and supplying, by the coefficient generating unit (134), the read predictive coefficient of each color component of the pixel of interest to the predictive calculation unit (76) (S80);

calculating, by the predicition calculation unit (76), the prediction value of each color component of the pixel of interest as a pixel value of each color component of the pixel of interest of the output image using the prediction tap from the prediction tap acquiring unit (132) and the predicitve coefficient of each color component of the pixel of interest supplied from the coefficient generating unit (134), and outputting the generated pixel value (S81);

determining, by the pixel-of-interest position deciding unit (131), whether or not all pixels of the output image have been set as the pixel of interest, and when it is determined that not all pixels of the output image have been set as the pixel of interest yet, repeating all previous method steps until all pixels of the output image are set as the pixel of interest, and when it is determined that all pixels of the output image have been set as the pixel of interest, the method ends (S82).

2.  A program causing a computer to execute the method steps of:

deciding a number of pixels of an output image to be predicted based on enlargement rates in a horizontal and vertical direction input from outside and deciding a pixel that has not been set as a pixel of interest yet among the pixels of the output image as the pixel of interest (S75);

deciding a position of the pixel of interest based on the enlargement rates in the horizontal direction and the vertical direction input from the outside;

acquiring a prediction tap from an image being adjusted in a white balance by correcting gains of a clamped image of a Bayer array, based on the pixel-of-interest position supplied, wherein the prediction tap includes pixel values of pixels of a first predetermined pattern from the white balanced image based on the pixel of interest position (S77);

acquiring a class tap from the white balanced image based on the pixel-of-interest position, wherein the class tap includes pixel values of pixels of a second predetermined pattern from the white balanced image based on the pixel of interest position (S78);

performing a class classification on the pixel of interest based on the class tap, and generating a class number corresponding to a class obtained as the result (S79);

reading a predicitve coefficient of each color component of the pixel of interest, which corresponds to the class of the class number, a color component of a center pixel of the class tap, and a distance between the pixel of interest and the center pixel among stored predictive coefficients (S80);

calculating the prediction value of each color component of the pixel of interest as a pixel value of each color component of the pixel of interest of the output image using the prediction tap and the predicitve coefficient of each color component of the pixel of interest, and outputting the generated pixel value (S81);

determining whether or not all pixels of the output image have been set as the pixel of interest, and when it is determined that not all pixels of the output image have been set as the pixel of interest yet, repeating all previous method steps until all pixels of the output image are set as the pixel of interest, and when it is determined that all pixels of the output image have been set as the pixel of interest, the method ends (S82).

3.  A image processing apparatus comprising a pixel-of-interest position deciding unit (131), a prediction tap acquiring unit (132), a class tap acquiring unit (133), a coefficient generating unit (134), a class number generating unit (74), a prediction calculation unit (76) and a white balance unit (53), wherein the pixel-of-interest position deciding unit (131) is configured to decide a number of pixels of an output image to be predicted based on enlargement rates in a horizontal and vertical direction input from outside and decide a pixel that has not been set as a pixel of interest yet among the pixels of the output image as the pixel of interest (S75);

the pixel-of-interest position deciding unit (131) is configured to decide a position of the pixel of interest based on the enlargement rates in the horizontal direction and the vertical direction input from the outside, and supply the decided pixel-of-interest position to the prediction tap acquiring unit (132) and the class tap acquiring unit (133) (S76);

the prediction tap acquiring unit (132) is configured to acquire a prediction tap from an image supplied from the white balance unit (53), being used for adjusting a white balance by correcting gains of a clamped image of a Bayer array, based on the pixel-of-interest position supplied from the pixel-of-interest position deciding uni (131), wherein the prediction tap includes pixel values of pixels of a first predetermined pattern from the image supplied from the white balance unit (53) based on the pixel of interest position, and supply the prediction tap to the prediction calculation unit (76) (S77);

the class tap acquiring unit (133) is configured to acquire a class tap from the image, supplied from the white balance unit (53), based on the pixel-of-interest position supplied from the pixel-of-interest position deciding unit (131), wherein the class tap includes pixel values of pixels of a second predetermined pattern from the image supplied from the white balance unit (53) based on the pixel of interest position, and supply the class tap to the class number generating unit (74) (S78);

the class number generating unit (74) is configured to perform a class classification on the pixel of interest based on the class tap supplied from the class tap acquiring unit (133), and generate a class number corresponding to a class obtained as the result, and supply the class number to the coefficient generating unit (134) (S79);

the coefficient generating unit (134) is configured to read a predicitve coefficient of each color component of the pixel of interest, which corresponds to the class of the class number supplied from the class number generating unit (74), a color component of a center pixel of the class tap, and a distance between the pixel of interest and the center pixel among stored predictive coefficients, and supply the read predictive coefficient of each color component of the pixel of interest to the predictive calculation unit (76) (S80);

the prediction calculation unit (76) is configured to calculate the prediction value of each color component of the pixel of interest as a pixel value of each color component of the pixel of interest of the output image using the prediction tap from the prediction tap acquiring unit (132) and the predicitve coefficient of each color component of the pixel of interest supplied from the coefficient generating unit (134), and output the generated pixel value (S81);

the pixel-of-interest position deciding unit (131) is configured to determine, whether or not all pixels of the output image have been set as the pixel of interest, and when it is determined that not all pixels of the output image have been set as the pixel of interest yet, repeat all previous method steps until all pixels of the output image are set as the pixel of interest, and when it is determined that all pixels of the output image have been set as the pixel of interest, the end the method (S82).

**Patentansprüche**

1. Bildverarbeitungsverfahren, das von einer Bildverarbeitungseinrichtung durchgeführt wird, die eine Interessierendes-Pixel-Positionsbeschließungseinheit (131), eine Prädiktions-Tap-Erfassungseinheit (132), eine Klasse-Tap-Erfassungseinheit (133), eine Koeffizientenerzeugungseinheit (134), eine Klassennummererzeugungseinheit (74), eine Prädiktionsberechnungseinheit (76) und eine Weißabgleicheinheit (53) umfasst, wobei das Verfahren Folgendes umfasst:

Beschließen einer Anzahl an Pixeln eines Ausgabebildes, die vorhergesagt werden soll, basierend auf Vergrößerungsraten in einer horizontalen Richtung und einer vertikalen Richtung, die von außerhalb eingegeben werden, durch die Interessierendes-Pixel-Positionsbeschließungseinheit (131) und Beschließen eines Pixels, das noch nicht als ein interessierendes Pixel festgelegt wurde, unter den Pixeln des Ausgabebildes als das interessierende Pixel durch die Interessierendes-Pixel-Positionsbeschließungseinheit (131) (S75);

Beschließen einer Position des interessierenden Pixels basierend auf den Vergrößerungsraten in der horizontalen Richtung und der vertikalen Richtung, die von außerhalb eingegeben werden, durch die Interessierendes-Pixel-Positionsbeschließungseinheit (131) und Liefern der beschlossenen Interessierendes-Pixel-Position an die Prädiktions-Tap-Erfassungseinheit (132) und die Klasse-Tap-Erfassungseinheit (133) durch die Interessierendes-Pixel-Positionsbeschließungseinheit (131) (S76);

Erfassen eines Prädiktions-Tap von einem Bild, das von der Weißabgleicheinheit (53) geliefert wird, die zum Anpassen eines Weißabgleichs durch Korrigieren von Verstärkungen eines eingespannten Bildes eines Bayer-Arrays verwendet wird, basierend auf der Interessierendes-Pixel-Position, die von der Interessierendes-Pixel-Positionsbeschließungseinheit (131) geliefert wird, durch die Prädiktions-Tap-Erfassungseinheit (132), wobei das Prädiktions-Tap Pixelwerte von Pixeln eines ersten vorbestimmten Musters von dem Bild, das von der Weißabgleicheinheit (53) geliefert wird, basierend auf der Interessierendes-Pixel-Position beinhaltet, und Liefern des Prädiktions-Tap an die Prädiktionsberechnungseinheit (76) durch die Prädiktions-Tap-Erfassungseinheit (132) (S77);

Erfassen eines Klasse-Tap von dem Bild, das von der Weißabgleicheinheit (53) geliefert wird, basierend auf der Interessierendes-Pixel-Position, die von der Interessierendes-Pixel-Positionsbeschließungseinheit (131) geliefert wird, durch die Klasse-Tap-Erfassungseinheit (133), wobei das Klasse-Tap Pixelwerte von Pixeln eines zweiten vorbestimmten Musters von dem Bild, das von der Weißabgleicheinheit (53) geliefert wird, basierend auf der Interessierendes-Pixel-Position beinhaltet, und Liefern des Klasse-Tap an die Klassennummererzeugungseinheit (74) durch die Klasse-Tap-Erfassungseinheit (133) (S78);

Durchführen einer Klassenklassifizierung bezüglich des interessierenden Pixels basierend auf dem Klasse-Tap, das von der Klasse-Tap-Erfassungseinheit (133) geliefert wird, durch die Klassennummererzeugungseinheit (74), und Erzeugen einer Klassennummer, die einer erhaltenen Klasse entspricht, als das Ergebnis durch die Klassennummererzeugungseinheit (74), und Liefern der Klassennummer an die Koeffizientenerzeugungseinheit (134) durch die Klassennummererzeugungseinheit (74) (S79);

Lesen eines Prädiktionskoeffizienten von jeder Farbkomponente des interessierenden Pixels, der der Klasse der Klassennummer, die von der Klassennummererzeugungseinheit (74) geliefert wird, einer Farbkomponente eines zentralen Pixels des Klasse-Tap und einem Abstand zwischen dem interessierenden Pixel und dem zentralen Pixel entspricht, unter gespeicherten Prädiktionskoeffizienten durch die Koeffizientenerzeugungseinheit (134) und Liefern des gelesenen Prädiktionskoeffizienten von jeder Farbkomponente des interessierenden Pixels an die Prädiktionsberechnungseinheit (76) durch die Koeffizientenerzeugungseinheit (134) (S80);

Berechnen des Prädiktionswertes von jeder Farbkomponente des interessierenden Pixels als ein Pixelwert von jeder Farbkomponente des interessierenden Pixels des Ausgabebildes unter Verwendung des Prädiktions-Tap von der Prädiktions-Tap-Erfassungseinheit (132) und des Prädiktionskoeffizienten von jeder Farbkomponente des interessierenden Pixels, der von der Koeffizientenerzeugungseinheit (134) geliefert wird, durch die Prädiktionsberechnungseinheit (76) und Ausgeben des erzeugten Pixelwertes (S81);

Bestimmen, ob alle Pixel des Ausgabebildes als das interessierende Pixel festgelegt wurden oder nicht, durch die Interessierendes-Pixel-Positionsbeschließungseinheit (131) und, wenn bestimmt wurde, dass noch nicht alle Pixel des Ausgabebildes als das interessierende Pixel festgelegt wurden, Wiederholen aller vorheriger Verfahrensschritte, bis alle Pixel des Ausgabebildes als das interessierende Pixel festgelegt wurden, und, wenn bestimmt wurde, dass alle Pixel des Ausgabebildes als das interessierende Pixel festgelegt wurden, endet das Verfahren (S82).

2. Programm, das bewirkt, dass ein Computer die Folgenden Verfahrensschritte ausführt:

Beschließen einer Anzahl an Pixeln eines Ausgabebildes, das vorhergesagt werden soll, basierend auf Vergrößerungsraten in einer horizontalen Richtung und einer vertikalen Richtung, die von außerhalb eingegeben werden, und Beschließen eines Pixels, das noch nicht als ein interessierendes Pixel festgelegt wurde, unter den Pixeln des Ausgabebildes als das interessierende Pixel (S75);

Beschließen einer Position des interessierenden Pixels basierend auf den Vergrößerungsraten in der horizontalen Richtung und der vertikalen Richtung, die von außerhalb eingegeben werden;

Erfassen eines Prädiktions-Tap von einem Bild, das durch Korrigieren von Verstärkungen eines eingespannten Bildes eines Bayer-Arrays basierend auf der Interessierendes-Pixel-Position in einem Weißabgleich angepasst wird, wobei das Prädiktions-Tap Pixelwerte von Pixeln eines ersten vorbestimmten Musters von dem weißabgeglichenen Bild basierend auf der Interessierendes-Pixel-Position beinhaltet (S77);

Erfassen eines Klasse-Tap von dem weißabgeglichenen Bild basierend auf der Interessierendes-Pixel-Position, wobei das Klasse-Tap Pixelwerte von Pixeln eines zweiten vorbestimmten Musters von dem weißabgeglichenen Bild basierend auf der Interessierendes-Pixel-Position beinhaltet (S78);

Durchführen einer Klassenklassifizierung bezüglich des interessierenden Pixels basierend auf dem Klasse-Tap und Erzeugen einer Klassenzahl, die einer erhaltenen Klasse entspricht, als das Ergebnis (S79);

Lesen eines Prädiktionskoeffizienten von jeder Farbkomponente des interessierenden Pixels, der der Klasse der Klassennummer, einer Farbkomponente eines zentralen Pixels des Klasse-Tap und einem Abstand zwischen dem interessierenden Pixel und dem zentralen Pixel entspricht, unter den gespeicherten Prädiktionskoeffizienten (S80);

Berechnen des Prädiktionswertes von jeder Farbkomponente des interessierenden Pixels als ein Pixelwert von jeder Farbkomponente des interessierenden Pixels des Ausgabebildes unter Verwendung des Prädiktions-Tap und des Prädiktionskoeffizienten von jeder Farbkomponente des interessierenden Pixels und Ausgeben des erzeugten Pixelwertes (S81);

Bestimmen, ob alle Pixel des Ausgabebildes als das interessierende Pixel festgelegt wurden oder nicht, und, wenn bestimmt wurde, dass noch nicht alle Pixel des Ausgabebildes als das interessierende Pixel festgelegt wurden, Wiederholen aller vorheriger Verfahrensschritte, bis alle Pixel des Ausgabebildes als das interessierende Pixel festgelegt wurden, und, wenn bestimmt wurde, dass alle Pixel des Ausgabebildes als das interessierende Pixel festgelegt wurden, endet das Verfahren (S82).

3. Bildverarbeitungseinrichtung, die eine Interessierendes-Pixel-Positionsbeschließungseinheit (131), eine Prädiktions-Tap-Erfassungseinheit (132), eine Klasse-Tap-Erfassungseinheit (133), eine Koeffizientenerzeugungseinheit (134), eine Klassennummererzeugungseinheit (74), eine Prädiktionsberechnungseinheit (76) und eine Weißabgleicheinheit (53) umfasst, wobei
die Interessierendes-Pixel-Positionsbeschließungseinheit (131) zum Beschließen einer Anzahl an Pixeln eines Ausgabebildes, die vorhergesagt werden soll, basierend auf Vergrößerungsraten in einer horizontalen Richtung und einer vertikalen Richtung, die von außerhalb eingegeben werden, und zum Beschließen eines Pixels, das noch nicht als das interessierende Pixel festgelegt wurde, unter den Pixeln des Ausgabebildes als das interessierende Pixel konfiguriert ist (S75);
die Interessierendes-Pixel-Positionsbeschließungseinheit (131) zum Beschließen einer Position des interessierenden Pixels basierend auf den Vergrößerungsraten in der horizontalen Richtung und der vertikalen Richtung, die von außerhalb eingegeben werden, und zum Liefern der beschlossenen Interessierendes-Pixel-Position an die Prädiktions-Tap-Erfassungseinheit (132) und die Klasse-Tap-Erfassungseinheit (133) konfiguriert ist (S76);
die Prädiktions-Tap-Erfassungseinheit (132) zum Erfassen eines Prädiktions-Tap von einem Bild, das von der Weißabgleicheinheit (53) geliefert wird, die zum Anpassen eines Weißabgleichs durch Korrigieren von Verstärkungen eines eingespannten Bildes eines Bayer-Arrays, basierend auf der Interessierendes-Pixel-Position, die von der Interessierendes-Pixel-Positionsbeschließungseinheit (131) geliefert wird, wobei das Prädiktions-Tap Pixelwerte von Pixeln eines ersten vorbestimmten Musters von dem Bild, das von der Weißabgleicheinheit (53) geliefert wird, basierend auf der Interessierendes-Pixel-Position beinhaltet, und zum Liefern des Prädiktions-Tap an die Prädiktionsberechnungseinheit (76) konfiguriert ist (S77);
die Klasse-Tap-Erfassungseinheit (133) zum Erfassen eines Klasse-Tap von dem Bild, das von der Weißabgleicheinheit (53) geliefert wird, basierend auf der Interessierendes-Pixel-Position, die von der Interessierendes-Pixel-Positionsbeschließungseinheit (131) geliefert wird, wobei das Klasse-Tap Pixelwerte von Pixeln eines zweiten vorbestimmten Musters von dem Bild, das von der Weißabgleicheinheit (53) geliefert wird, basierend auf der Interessierendes-Pixel-Position beinhaltet, und zum Liefern des Klasse-Tap an die Klassennummererzeugungseinheit (74) konfiguriert ist (S78);
die Klassennummererzeugungseinheit (74) zum Durchführen einer Klassenklassifizierung bezüglich des interessierenden Pixels basierend auf dem Klasse-Tap, das von der Klasse-Tap-Erfassungseinheit (133) geliefert wird, und zum Erzeugen einer Klassennummer, die einer erhaltenen Klasse entspricht, als das Ergebnis und zum Liefern der Klassennummer an die Koeffizientenerzeugungseinheit (134) konfiguriert ist (S79);
die Koeffizientenerzeugungseinheit (134) zum Lesen eines Prädiktionskoeffizienten von jeder Farbkomponente des interessierenden Pixels, der der Klasse der Klassennummer, die von der Klassennummererzeugungseinheit (74) geliefert wird, einer Farbkomponente eines zentralen Pixels des Klasse-Tap und einem Abstand zwischen dem interessierenden Pixel und dem zentralen Pixel entspricht, unter gespeicherten Prädiktionskoeffizienten und zum Liefern des gelesenen Prädiktionskoeffizienten von jeder Farbkomponente des interessierenden Pixels an die Prädiktionsberechnungseinheit (76) konfiguriert ist (S80);
die Prädiktionsberechnungseinheit (76) zum Berechnen des Prädiktionswertes von jeder Farbkomponente des interessierenden Pixels als ein Pixelwert von jeder Farbkomponente des interessierenden Pixels des Ausgabebildes unter Verwendung des Prädiktions-Tap von der Prädiktions-Tap-Erfassungseinheit (132) und des Prädiktionskoeffizienten von jeder Farbkomponente des interessierenden Pixels, der von der Koeffizientenerzeugungseinheit (134) geliefert wird, und zum Ausgeben des erzeugten Pixelwertes konfiguriert ist (S81);
die Interessierendes-Pixel-Positionsbeschließungseinheit (131) zum Bestimmen, ob alle Pixel des Ausgabebildes als das interessierende Pixel festgelegt wurden oder nicht, und, wenn bestimmt wurde, dass noch nicht alle Pixel des Ausgabebildes als das interessierende Pixel festgelegt wurden, Wiederholen aller vorheriger Verfahrensschritte, bis alle Pixel des Ausgabebildes als das interessierende Pixel festgelegt wurden, konfiguriert ist und, wenn bestimmt wurde, dass alle Pixel des Ausgabebildes als das interessierende Pixel festgelegt wurden, endet das Verfahren (S82).

**Revendications**

1. Procédé de traitement d'image effectué par un appareil de traitement d'image comprenant une unité de décision de position de pixel d'intérêt (131), une unité d'acquisition de prise de prédiction (132), une unité d'acquisition de prise de classe (133), une unité de génération de coefficient (134), une unité de génération de nombre de classes (74), une unité de calcul de prédiction (76) et une unité de balance de blanc (53), le procédé consistant à :

- décider, avec l'unité de décision de position de pixel d'intérêt (131), un nombre de pixels d'une image de sortie devant être prédit en fonction de taux d'agrandissement dans une direction horizontale et verticale entrés de l'extérieur, et décider, avec l'unité de décision de position de pixel d'intérêt (131), d'un pixel qui n'a pas encore été choisi comme pixel d'intérêt parmi les pixels de l'image de sortie comme le pixel d'intérêt (S75) ;

- décider, avec l'unité de décision de position de pixel d'intérêt (131), une position du pixel d'intérêt en fonction des taux d'agrandissement dans la direction horizontale et la direction verticale entrés de l'extérieur, et envoyer, avec l'unité de décision de position de pixel d'intérêt (131), la position du pixel d'intérêt décidée à l'unité d'acquisition de prise de prédiction (132) et à l'unité d'acquisition de prise de classe (133) (S76) ;

- acquérir, avec l'unité d'acquisition de prise de prédiction (132), une prise de prédiction depuis une image envoyée de l'unité de balance de blanc (53), qui est utilisée pour ajuster une balance de blanc en corrigeant les gains d'une image fixée d'un réseau Bayer, en fonction de la position du pixel d'intérêt envoyée par l'unité de décision de position de pixel d'intérêt (131), dans lequel la prise de prédiction comprend des valeurs de pixel de pixels d'un premier motif prédéterminé depuis l'image envoyée depuis l'unité de balance de blanc (53) en fonction de la position du pixel d'intérêt, et envoyer, avec l'unité d'acquisition de prise de prédiction (132), la prise de prédiction à l'unité de calcul de prédiction (76) (S77) ;

- acquérir, avec l'unité d'acquisition de prise de classe (133), une prise de classe depuis l'image envoyée de l'unité de balance de blanc (53), en fonction de la position du pixel d'intérêt envoyée par l'unité de décision de position de pixel d'intérêt (131), dans lequel la prise de classe comprend des valeurs de pixel de pixels d'un second motif prédéterminé depuis l'image envoyée depuis l'unité de balance de blanc (53) en fonction de la position du pixel d'intérêt, et envoyer, avec l'unité d'acquisition de prise de classe (133), la prise de classe à l'unité de génération de nombre de classes (74) (S78) ;

- effectuer, avec l'unité de génération de nombre de classes (74), une classification de classes sur le pixel d'intérêt en fonction de la prise de classe fournie par l'unité d'acquisition de prise de classe (133), et générer, avec l'unité de génération de nombre de classes (74), un nombre de classes correspondant à une classe obtenue en résultat, et envoyer, avec l'unité de génération de nombre de classes (74), le nombre de classe à l'unité de génération de coefficient (134) (S79) ;

- lire, avec l'unité de génération de coefficient (134), un coefficient prédictif de chaque composante couleur du pixel d'intérêt qui correspond à la classe du nombre de classes envoyé par l'unité de génération de nombre de classes (74), une composante couleur d'un pixel central de la prise de classe et une distance entre le pixel d'intérêt et le pixel central parmi des coefficients prédictifs stockés, et envoyer, avec l'unité de génération de coefficient (134), le coefficient prédictif lu de chaque composante de couleur du pixel d'intérêt à l'unité de calcul de prédiction (76) (S80) ;

- calculer, avec l'unité de calcul de prédiction (76), la valeur de prédiction de chaque composante couleur du pixel d'intérêt comme une valeur de pixel de chaque composante couleur du pixel d'intérêt de l'image de sortie en utilisant la prise de prédiction fournie par l'unité d'acquisition de prise de prédiction (132) et le coefficient de prédiction de chaque composante couleur du pixel d'intérêt fourni par l'unité de génération de coefficient (134), et émettre la valeur de pixel générée (S81) ;

- déterminer, avec l'unité de décision de position de pixel d'intérêt (131), si oui ou non tous les pixels de l'image de sortie ont été définis comme le pixel d'intérêt, et lorsqu'il est déterminé que tous les pixels de l'image de sortie n'ont pas encore été définis comme le pixel d'intérêt, répéter toutes les étapes précédentes du procédé jusqu'à ce que tous les pixels de l'image de sortie soient définis comme le pixel d'intérêt, et lorsqu'il est déterminé que tous les pixels de l'image de sortie ont été définis comme le pixel d'intérêt, interrompre le procédé (S82).

2. Programme contraignant un ordinateur à exécuter les étapes du procédé consistant à :

- décider un nombre de pixels d'une image de sortie devant être prédit en fonction de taux d'agrandissement dans une direction horizontale et verticale entrés de l'extérieur, et décider d'un pixel qui n'a pas encore été choisi comme pixel d'intérêt parmi les pixels de l'image de sortie comme le pixel d'intérêt (S75) ;

- décider une position du pixel d'intérêt en fonction des taux d'agrandissement dans la direction horizontale et la direction verticales entrés de l'extérieur ;

- acquérir une prise de prédiction depuis une image ajustée en balance de blanc en corrigeant les gains d'une image fixée d'un réseau Bayer, en fonction de la position du pixel d'intérêt envoyée, dans lequel la prise de prédiction comprend des valeurs de pixel de pixels d'un premier motif prédéterminé depuis l'image ajustée en blancs en fonction de la position du pixel d'intérêt (S77) ;

- acquérir une prise de classe depuis l'image ajustée en blancs en fonction de la position du pixel d'intérêt, dans lequel la prise de classe comprend des valeurs de pixel de pixels d'un second motif prédéterminé depuis l'image ajustée en blancs en fonction de la position du pixel d'intérêt (S78) ;

- effectuer une classification de classes sur le pixel d'intérêt en fonction de la prise de classe, et générer un nombre de classes correspondant à une classe obtenue en résultat (S79) ;

- lire un coefficient prédictif de chaque composante couleur du pixel d'intérêt qui correspond à la classe du nombre de classes, une composante couleur d'un pixel central de la prise de classe et une distance entre le pixel d'intérêt et le pixel central parmi des coefficients prédictifs stockés (S80) ;

- calculer la valeur de prédiction de chaque composante couleur du pixel d'intérêt comme une valeur de pixel de chaque composante couleur du pixel d'intérêt de l'image de sortie en utilisant la prise de prédiction et le coefficient de prédiction de chaque composante couleur du pixel d'intérêt, et émettre la valeur de pixel générée (S81) ;

- déterminer si oui ou non tous les pixels de l'image de sortie ont été définis comme le pixel d'intérêt, et lorsqu'il est déterminé que tous les pixels de l'image de sortie n'ont pas encore été définis comme le pixel d'intérêt, répéter toutes les étapes précédentes du procédé jusqu'à ce que tous les pixels de l'image de sortie soient définis comme le pixel d'intérêt, et lorsqu'il est déterminé que tous les pixels de l'image de sortie ont été définis comme le pixel d'intérêt, interrompre le procédé (S82).

3.  Appareil de traitement d'image comprenant une unité de décision de position de pixel d'intérêt (131), une unité d'acquisition de prise de prédiction (132), une unité d'acquisition de prise de classe (133), une unité de génération de coefficient (134), une unité de génération de nombre de classes (74), une unité de calcul de prédiction (76) et une unité de balance de blanc (53), dans lequel :

- l'unité de décision de position de pixel d'intérêt (131) est conçue pour décider un nombre de pixel d'une image de sortie devant être prédit en fonction de taux d'agrandissement dans une direction horizontale et verticale entrés de l'extérieur, et décider d'un pixel qui n'a pas encore été choisi comme pixel d'intérêt parmi les pixels de l'image de sortie comme le pixel d'intérêt (S75) ;

- l'unité de décision de position de pixel d'intérêt (131) est conçue pour décider une position du pixel d'intérêt en fonction des taux d'agrandissement dans la direction horizontale et la direction verticales entrés de l'extérieur, et envoyer la position du pixel d'intérêt décidée à l'unité d'acquisition de prise de prédiction (132) et à l'unité d'acquisition de prise de classe (133) (S76) ;

- l'unité d'acquisition de prise de prédiction (132) est conçue pour acquérir une prise de prédiction depuis une image envoyée de l'unité de balance de blanc (53), qui est utilisée pour ajuster une balance de blanc en corrigeant les gains d'une image fixée d'un réseau Bayer, en fonction de la position du pixel d'intérêt envoyée par l'unité de décision de position de pixel d'intérêt (131), dans lequel la prise de prédiction comprend des valeurs de pixel de pixels d'un premier motif prédéterminé depuis l'image envoyée depuis l'unité de balance de blanc (53) en fonction de la position du pixel d'intérêt, et envoyer la prise de prédiction à l'unité de calcul de prédiction (76) (S77) ;

- l'unité d'acquisition de prise de classe (133) est conçue pour acquérir une prise de classe depuis l'image envoyée de l'unité de balance de blanc (53), en fonction de la position du pixel d'intérêt envoyée par l'unité de décision de position de pixel d'intérêt (131), dans lequel la prise de classe comprend des valeurs de pixel de pixels d'un second motif prédéterminé depuis l'image envoyée depuis l'unité de balance de blanc (53) en fonction de la position du pixel d'intérêt, et envoyer la prise de classe à l'unité de génération de nombre de classes (74) (S78) ;

- l'unité de génération de nombre de classes (74) est conçue pour effectuer une classification de classes sur le pixel d'intérêt en fonction de la prise de classe fournie par l'unité d'acquisition de prise de classe (133), et générer un nombre de classes correspondant à une classe obtenue en résultat, et envoyer le nombre de classe à l'unité de génération de coefficient (134) (S79) ;

- l'unité de génération de coefficient (134) est conçue pour lire un coefficient prédictif de chaque composante couleur du pixel d'intérêt qui correspond à la classe du nombre de classes envoyé par l'unité de génération de nombre de classes (74), une composante couleur d'un pixel central de la prise de classe et une distance entre le pixel d'intérêt et le pixel central parmi des coefficients prédictifs stockés, et envoyer le coefficient prédictif lu de chaque composante couleur du pixel d'intérêt à l'unité de calcul de prédiction (76) (S80) ;

- l'unité de calcul de prédiction (76) est conçue pour calculer la valeur de prédiction de chaque composante couleur du pixel d'intérêt comme une valeur de pixel de chaque composante couleur du pixel d'intérêt de l'image de sortie en utilisant la prise de prédiction fournie par l'unité d'acquisition de prise de prédiction (132) et le coefficient de prédiction de chaque composante couleur du pixel d'intérêt fourni par l'unité de génération de coefficient (134), et émettre la valeur de pixel générée (S81) ;

- l'unité de décision de position de pixel d'intérêt (131) est conçue pour déterminer si oui ou non tous les pixels de l'image de sortie ont été définis comme le pixel d'intérêt, et lorsqu'il est déterminé que tous les pixels de l'image de sortie n'ont pas encore été définis comme le pixel d'intérêt, répéter toutes les étapes précédentes du procédé jusqu'à ce que tous les pixels de l'image de sortie soient définis comme le pixel d'intérêt, et lorsqu'il est déterminé que tous les pixels de l'image de sortie ont été définis comme le pixel d'intérêt, interrompre le procédé (S82).

# FIG. 1

| R | G | R | G | R | G | R |
|---|---|---|---|---|---|---|
| G | B | G | B | G | B | G |
| R | G | R | G | R | G | R |
| G | B | G | B | G | B | G |
| R | G | R | G | R | G | R |
| G | B | G | B | G | B | G |
| R | G | R | G | R | G | R |

# FIG. 2

```
  11              12                 13
IMAGING  →  DEMOSAICING   →  ENLARGEMENT  →
ELEMENT     PROCESSING UNIT    PROCESSING UNIT
                                   ↑
                                      ↖
                                       10
```

# FIG. 3

```
  11                   31
IMAGING    →     ENLARGEMENT    →
ELEMENT          PROCESSING UNIT
                      ↑
                         ↖
                          30
```

**FIG. 4**

51        52        53        54

| DEFECTIVE PIXEL CORRECTING UNIT | → | CLAMP PROCESSING UNIT | → | WHITE BALANCE UNIT | → | ENLARGEMENT PREDICTION PROCESSING UNIT | → |

31

**FIG. 5**

## FIG. 6

## FIG. 7

FIG. 8

FIG. 9

# FIG. 10

```
IMAGE PROCESSING START
```

| | |
|---|---|
| DETECT PIXEL VALUE OF DEFECTIVE PIXEL IN IMAGING ELEMENT | S11 |

| | |
|---|---|
| CORRECT DETECTED PIXEL VALUE | S12 |

| | |
|---|---|
| CLAMP CORRECTED IMAGE OF BAYER ARRAY | S13 |

| | |
|---|---|
| ADJUST WHITE BALANCE OF CLAMPED IMAGE OF BAYER ARRAY | S14 |

| | |
|---|---|
| DECIDE PIXEL OF INTEREST | S15 |

| | |
|---|---|
| DECIDE POSITION CORRESPONDING TO PREDICTION TAP OF PIXEL OF INTEREST | S16 |

| | |
|---|---|
| INTERPOLATE PREDICTION TAP OF EACH COLOR COMPONENT | S17 |

| | |
|---|---|
| DECIDE POSITION CORRESPONDING TO CLASS TAP OF PIXEL OF INTEREST | S18 |

| | |
|---|---|
| INTERPOLATE CLASS TAP OF EACH COLOR COMPONENT | S19 |

| | |
|---|---|
| PERFORM CLASS CLASSIFICATION ON PIXEL OF INTEREST FOR EACH COLOR COMPONENT BASED ON CLASS TAP OF EACH COLOR COMPONENT | S20 |

| | |
|---|---|
| READ PREDICTIVE COEFFICIENT OF CLASS CORRESPONDING TO CLASS NUMBER OF EACH COLOR COMPONENT | S21 |

| | |
|---|---|
| PERFORM PREDETERMINED PREDICTION CALCULATION FOR EACH COLOR COMPONENT USING PREDICTION TAP OF EACH COLOR COMPONENT AND PREDICTIVE COEFFICIENT OF EACH COLOR COMPONENT | S22 |

HAVE ALL PIXELS OF OUTPUT IMAGE BEEN SET AS PIXEL OF INTEREST? — S23

No

Yes

```
END
```

EP 2 525 325 B1

FIG. 11

101
TEACHER IMAGE
STORAGE UNIT

102
REDUCTION
PROCESSING UNIT

103
THINNING
PROCESSING UNIT

104
INTERPOLATING
UNIT

105
PREDICTION TAP
ACQUIRING UNIT

108
ADDING UNIT

109
PREDICTIVE
COEFFICIENT
CALCULATION UNIT

106
CLASS TAP
ACQUIRING UNIT

107
CLASS NUMBER
GENERATING UNIT

100

# FIG. 12

```
                    ┌──────────────────────────┐
                    │  LEARNING PROCESS START  │
                    └──────────────────────────┘
                                  │
    ┌─────────────────────────────▼─────────────────────────────┐
    │  REDUCE TEACHER IMAGE AT PREDETERMINED REDUCTION RATE  │ S41
    └───────────────────────────────────────────────────────┘
                                  │
    ┌─────────────────────────────▼─────────────────────────────┐
    │  THIN OUT PREDETERMINED COLOR COMPONENT OF REDUCED     │ S42
    │                    TEACHER IMAGE                       │
    └───────────────────────────────────────────────────────┘
```

S41 — REDUCE TEACHER IMAGE AT PREDETERMINED REDUCTION RATE

S42 — THIN OUT PREDETERMINED COLOR COMPONENT OF REDUCED TEACHER IMAGE

S43 — DECIDE BLOCK OF INTEREST

S44 — OUTPUT PIXEL VALUE OF EACH COLOR COMPONENT OF BLOCK OF INTEREST

S45 — DECIDE POSITIONS CORRESPONDING TO PREDICTION TAP OF BLOCK OF INTEREST

S46 — INTERPOLATE PREDICTION TAP OF EACH COLOR COMPONENT

S47 — DECIDE POSITIONS CORRESPONDING TO CLASS TAP OF BLOCK OF INTEREST

S48 — INTERPOLATE CLASS TAP OF EACH COLOR COMPONENT

S49 — PERFORM CLASS CLASSIFICATION ON EACH PIXEL OF BLOCK OF INTEREST FOR EACH COLOR COMPONENT BASED ON CLASS TAP OF EACH COLOR COMPONENT

S50 — ADD PIXEL VALUE OF EACH COLOR COMPONENT OF BLOCK OF INTEREST TO PREDICTION TAP FOR EACH CLASS AND COLOR COMPONENT

S51 — HAVE ALL BLOCKS OF TEACHER IMAGE BEEN SET AS BLOCK OF INTEREST?   No / Yes

S52 — HAS INPUT OF TEACHER IMAGE ENDED?   No / Yes

S53 — SOLVE NORMAL EQUATION OF EACH COLOR COMPONENT OF PREDETERMINED CLASS

S54 — HAS NORMAL EQUATION OF EACH COLOR COMPONENT OF ALL CLASSES BEEN SOLVED?   No / Yes

END

# FIG. 13

A

IMAGE OF BAYER ARRAY          OUTPUT IMAGE

B

## FIG. 14

## FIG. 15

## FIG. 16

**FIG. 17**

**FIG. 18**

# FIG. 19

IMAGE PROCESSING START

DETECT PIXEL VALUE OF DEFECTIVE PIXEL IN IMAGING ELEMENT — S71

CORRECT DETECTED PIXEL VALUE — S72

CLAMP CORRECTED IMAGE OF BAYER ARRAY — S73

ADJUST WHITE BALANCE OF CLAMPED IMAGE OF BAYER ARRAY — S74

DECIDE PIXEL OF INTEREST — S75

DECIDE POSITION OF PIXEL OF INTEREST BASED ON ENLARGEMENT RATE — S76

ACQUIRE PREDICTION TAP — S77

ACQUIRE CLASS TAP — S78

PERFORM CLASS CLASSIFICATION ON PIXEL OF INTEREST BASED ON CLASS TAP — S79

READ PREDICTIVE COEFFICIENT OF EACH COLOR COMPONENT OF PIXEL OF INTEREST CORRESPONDING TO CLASS OF CLASS NUMBER, COLOR COMPONENT OF CENTER PIXEL, AND DISTANCE BETWEEN PIXEL OF INTEREST AND CENTER PIXEL — S80

PERFORM PREDETERMINED PREDICTION CALCULATION FOR EACH COLOR COMPONENT OF PIXEL OF INTEREST USING PREDICTION TAP AND PREDICTIVE COEFFICIENT OF EACH COLOR COMPONENT OF PIXEL OF INTEREST — S81

S82 HAVE ALL PIXELS OF OUTPUT IMAGE BEEN SET AS PIXEL OF INTEREST?

No

Yes

END

**FIG. 20**

# FIG. 21

( LEARNING PROCESS START )

REDUCE TEACHER IMAGE AT PREDETERMINED REDUCTION RATE | S101

THIN OUT PREDETERMINED COLOR COMPONENT OF REDUCED TEACHER IMAGE | S102

DECIDE BLOCK OF INTEREST | S103

OUTPUT PIXEL VALUE OF EACH COLOR COMPONENT OF BLOCK OF INTEREST | S104

DECIDE POSITION OF PIXEL OF INTEREST OF BLOCK OF INTEREST | S105

ACQUIRE PREDICTION TAP | S106

ACQUIRE CLASS TAP | S107

PERFORM CLASS CLASSIFICATION ON EACH PIXEL OF BLOCK OF INTEREST BASED ON CLASS TAP | S108

ADD PIXEL VALUE OF EACH COLOR COMPONENT OF BLOCK OF INTEREST TO PREDICTION TAP FOR EACH CLASS OF EACH PIXEL OF BLOCK OF INTEREST, COLOR COMPONENT OF PIXEL, COLOR COMPONENT OF CENTER PIXEL CORRESPONDING TO PIXEL, AND DISTANCE BETWEEN PIXEL AND CENTER PIXEL | S109

S110
HAVE ALL BLOCKS OF TEACHER IMAGE BEEN SET AS BLOCK OF INTEREST?
No

↓ Yes

S111
HAS INPUT OF TEACHER IMAGE ENDED?
No

↓ Yes

SOLVE NORMAL EQUATION OF EACH COLOR COMPONENT OF PIXEL OF TEACHER IMAGE OF PREDETERMINED CLASS, COLOR COMPONENT OF CENTER PIXEL CORRESPONDING TO PIXEL, AND DISTANCE BETWEEN PIXEL AND CENTER PIXEL | S112

S113
HAVE NORMAL EQUATIONS OF ALL CLASSES BEEN SOLVED?
No

↓ Yes

( END )

**FIG. 22**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1073279 A1
- JP 2005269395 A
- JP 2006054576 A
- JP 4441860 B
- JP 2011113058 A